(19) Europäisches Patentamt
European Patent Office
Office européen des brevets

(11) EP 1 975 439 B1

(12) **EUROPEAN PATENT SPECIFICATION**

(45) Date of publication and mention of the grant of the patent:
**22.05.2019 Bulletin 2019/21**

(51) Int Cl.:
***F16D 48/06*** *(2006.01)*

(21) Application number: **08003274.1**

(22) Date of filing: **22.02.2008**

(54) **Clutch with clutch controller, method of controlling clutch, and straddle-type vehicle**

Kupplung mit Kupplungssteuergerät, Steuerverfahren für die Kupplung und Grätschsitzfahrzeug

Embrayage doté d'un contrôleur d'embrayage, procédé de contrôle de l'embrayage et véhicule de type à enfourcher

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **23.02.2007 JP 2007043645**
**07.02.2008 JP 2008028131**

(43) Date of publication of application:
**01.10.2008 Bulletin 2008/40**

(73) Proprietor: **Yamaha Hatsudoki Kabushiki Kaisha**
**Iwata-shi, Shizuoka 438-8501 (JP)**

(72) Inventor: **Minami, Kengo**
**Iwata-shi**
**Shizuoka-ken 438-8501 (JP)**

(74) Representative: **Grünecker Patent- und Rechtsanwälte**
**PartG mbB**
**Leopoldstraße 4**
**80802 München (DE)**

(56) References cited:
**EP-A1- 1 688 635**
**EP-A2- 1 617 058**
**WO-A1-03/019029**
**DE-A1-102005 030 191**
**DE-A1-102005 030 534**
**DE-A1-102005 057 844**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 975 439 B1

## Description

The present invention relates to a technology for controlling an engagement state of a clutch by actuating an actuator. See as related prior art DE102005030534, EP1617058, DE102005057844, DE102005030191, EP1688635 and WO03/019029.

In a vehicle with a semi-automatic transmission that actuates an actuator to engage or disengage a clutch, the clutch is provided with a drive-side member (for example, friction disk), which rotates upon receipt of rotational force from a driving source, and a driven-side member (for example, clutch disk), which is pressed by the drive-side member to operate in conjunction with the drive-side member. The vehicle controls the engagement state of the clutch based on a difference in rotational speed between the drive-side member and the driven-side member (for example, Patent Document 1). Generally, such vehicles control or gradually reduce the difference in rotational speed between the drive-side member and the driven-side member during engaging operation of the clutch. Patent Document 1: JP-A-2001-146930
The aforementioned conventional vehicle controls the engagement state of the clutch based on the difference in rotational speed during engaging operation of the clutch. This, however, can prevent appropriate torque from being constantly transmitted from the drive-side member to a downstream mechanism including the driven-side member, and thus can impair riding comfort. For example, during engaging operation of the clutch, torque transmitted to the driven-side member increases sharply, providing shocks to the vehicle. In order to solve such a problem, another control method has been also proposed, in which a half-clutch state is maintained until the difference in rotational speed is almost zero. However, such a control method can result in insufficient torque being continuously transmitted to the driven-side member over a long time period. This case causes the vehicle to decelerate excessively.

The present invention is made in view of the foregoing problems, and an object of the invention is to provide a clutch with a clutch controller, a method of controlling a clutch, and a straddle-type vehicle, which allow appropriate torque to be transmitted during clutch engaging operation.

This objective for the apparatus aspect is solved in an inventive manner by a clutch having a clutch controller for controlling an engagement state of the clutch by actuating an actuator, comprising: an actual torque obtaining means for obtaining torque transmitted from a drive-side member of the clutch to a downstream mechanism in a torque transmission path as actual transmission torque, the downstream mechanism including a driven-side member of the clutch; a target torque obtaining means for obtaining torque that is supposed to be transmitted from the drive-side member to the downstream mechanism in the torque transmission path as target transmission torque; and a control means for actuating the actuator by an actuation amount according to a difference between the actual transmission torque and the target transmission torque.

Preferably, the actual torque obtaining means is configured to calculate the actual transmission torque based on torque outputted from a power source and inertia torque produced on a mechanism upstream of the drive-side member in the torque transmission path.

According to a preferred embodiment, the clutch further comprises an operation detecting means for detecting an amount of accelerator operation performed by a user, wherein the target torque obtaining means is configured to obtain the target transmission torque according to the amount of the accelerator operation.

As an essential aspect of the invention, the target torque obtaining means is configured to estimate torque to be transmitted from the drive-side member to the downstream mechanism in the torque transmission path after the drive-side member and the driven-side member are completely engaged, and to define the estimated torque as the target transmission torque.

Further, preferably the target torque obtaining means is configured to estimate torque to be outputted from the power source after the drive-side member and the driven-side member are completely engaged and inertia torque to be produced on the mechanism upstream of the drive-side member in the torque transmission path after the drive-side member and the driven-side member are completely engaged, and based on the estimated torque and inertial torque, to estimate the torque to be transmitted to the downstream mechanism after the drive-side member and the driven-side member are completely engaged.

Still further, preferably the actuator is provided that is capable of being actuated in an engagement direction to engage the clutch or in a disengagement direction to disengage the clutch, and the control means is configured to actuate the actuator in either of the directions determined based on the difference between the target transmission torque and the actual transmission torque and a difference in rotational speed between the drive-side member or the mechanism upstream of the drive-side member and the driven-side member or the mechanism downstream of the driven-side member.

There is further taught a straddle-type vehicle comprising: a power source; and a clutch for transmitting torque of the power source or interrupting transmission of the torque having the features of one of the above embodiments.

For the method aspect, this objective is solved in an inventive manner by a method of controlling a clutch for controlling an engagement state of the clutch by actuating an actuator, the method comprising: actuating the actuator by an actuation amount obtained according to a difference between actual transmission torque as torque transmitted from a drive-side member of the clutch to a downstream mechanism in a torque transmission path, the downstream mechanism including a driven-side member of the clutch, and target transmission torque as torque that is supposed to be transmitted from the drive-side member to the downstream mechanism in the torque transmission path.

In the following, the present invention is explained in greater detail with respect to several embodiments thereof in conjunction with the accompanying drawings, wherein:

FIG. 1 is a side view of a motorcycle provided with a clutch controller according to an embodiment of the present teaching,

FIG. 2 is a schematic view of a mechanism provided on a torque transmission path of the motorcycle,

FIG. 3 is a block diagram illustrating a configuration of the clutch controller,

FIG. 4 is an explanatory view showing changes in actual transmission torque with respect to time during engaging operation of a clutch,

FIG. 5 is a block diagram illustrating functions of a control unit provided in the clutch controller,

FIG. 6 is a graph illustrating the relationship between a difference between target transmission torque and actual transmission torque, and a command actuation amount obtained from an actuation amount relational expression,

FIG. 7 is a graph showing the relationship between an actuation amount correction value and an engagement state of the clutch,

FIG. 8 is a flowchart showing an example of the processing steps executed by the control unit,

FIGs. 9(a) to 9(e) are time charts showing examples of the results from the processing executed at gear shifting,

FIG. 10 is a graph showing the relationship between target transmission torque and an accelerator displacement,

FIG. 11 is a graph showing the relationship between a command actuation amount represented by a disengagement actuation amount relational expression and a value obtained by subtracting actual transmission torque from target transmission torque, and

FIG. 12 is a flowchart showing another example of the processing steps executed by the control unit.

Description of Reference Numerals and Symbols:

1: motorcycle
2: front wheel
3: rear wheel
4: front fork
5: handlebars
9a: shift-up switch
9b: shift-down switch
10: clutch controller
11: control unit
11a: actual torque obtaining section (actual torque obtaining means)
11b: target torque obtaining section (target torque obtaining means)
11c: clutch actuator control section (control means)
11d: shift actuator control section
12: storage unit
13: clutch actuator drive circuit
14: clutch actuator
15: shift actuator drive circuit

16: shift actuator
17: accelerator operation detector
18: engine speed detector
19: vehicle speed detector
21: gear position detector
22: clutch position detector
23a, 23b: clutch rotational speed detector
30: engine
31: cylinder
32: piston
33: intake port
34: crankshaft
35: intake pipe
36: primary speed reducing mechanism
37: throttle body
40: clutch
41: drive-side member
42: driven-side member
43: push rod
44: clutch spring
50: secondary speed reducing mechanism
51: gearbox
52: main shaft
53a, 54a, 53b, 54b: shift gear
55: countershaft
56: gearshift mechanism
57: transmission mechanism

A description will hereinafter be made of an embodiment of the present teaching with reference to the drawings. FIG. 1 is a side view of a motorcycle 1 provided with a clutch controller 10 as an example of the embodiment of the teaching. FIG. 2 is a schematic view of a mechanism provided on a torque transmission path of the motorcycle 1.

As shown in FIG. 1 or FIG. 2, the motorcycle 1 is provided not only with the clutch controller 10, but also with an engine 30, a primary speed reducing mechanism 36, a clutch 40, a secondary speed reducing mechanism 50, a front wheel 2, and a rear wheel 3.

As shown in FIG. 1, the front wheel 2 is located at a front part of a vehicle body, and rotatably supported by lower ends of a front fork 4 extending vertically. Handlebars 5 are connected to the top of the front fork 4. An accelerator grip 5a to be gripped by a rider is mounted to the right end of the handlebars 5. The accelerator grip 5a is connected to a throttle valve 37a provided in a throttle body 37 (see FIG. 2). The throttle valve 37a is rotated according to rider's accelerator operation, and a certain amount of air, which depends on the rotation amount of the throttle valve 37a, is delivered to the engine 30. The engine 30 outputs torque according to the rider's accelerator operation. The motorcycle 1 may be provided with an electronically-controlled throttle device. In this case, there are provided a sensor for detecting a rider's accelerator operation and an actuator for rotating the throttle valve 37a according to the accelerator operation detected by the sensor.

As shown in FIG. 2, the engine 30 has a cylinder 31, a piston 32, an intake port 33, and a crankshaft 34. The throttle body 37 is connected to the intake port 33 via an intake pipe 35.

The throttle valve 37a is placed within an intake passage of the throttle body 37. As described above, the throttle valve 37a rotates according to the rider's accelerator operation, and a certain amount of air, which depends on the accelerator operation, is delivered from the throttle body 37 to the engine 30. Mixture of air and fuel supplied from a fuel supplier (not shown, for example, injector or carburetor) is delivered to an interior of the cylinder 31. Burning the air-fuel mixture causes the piston 32 to reciprocate within the cylinder 31. The reciprocating motion of the piston 32 is converted into rotating motion by the crankshaft 34, thereby outputting torque from the engine 30.

The primary speed reducing mechanism 36 includes: a drive-side primary reduction gear 36a, which operates in conjunction with the crankshaft 34; and a driven-side primary reduction gear 36b, which meshes with the primary reduction gear 36a. The primary speed reducing mechanism 36 decelerates the rotation of the engine 30 at a predetermined ratio.

The clutch 40 is a friction clutch, for example, and is provided with a drive-side member 41 and a driven-side member 42. The drive-side member 41 includes a friction disk, for example, and rotates together with the drive-side primary reduction gear 36a. The driven-side member 42 includes a clutch disk, for example, and rotates together with a main shaft 52. The drive-side member 41 and the driven-side member 42 are pressed against each other by elastic force of a clutch spring 44 at the time of engaging the clutch 40, so that the torque of the engine 30 is transmitted from the drive-side member 41 to the driven-side member 42. Also, when the clutch 40 is disengaged, the driven-side member 42 is moved away from the drive-side member 41, so that torque transmission from the drive-side member 41 is interrupted. The clutch 40 is engaged or disengaged by a clutch actuator 14 provided in the clutch controller 10. More specifically, the clutch actuator 14 presses a push rod 43, provided interior of the main shaft 52, in the axial direction against the elastic force of the clutch spring 44 or release the pressed push rod 43, so that the driven-side member 42 is moved away from the drive-side member 41 to disengage the clutch 40 or so that the driven-side member 42 is pressed against the drive-side member 41 to engage the clutch 40. Control of the clutch 40 by means of the clutch controller 10 will be discussed in details later.

The secondary speed reducing mechanism 50 is designed to decelerate the rotation of the main shaft 52 and transmit the decelerated rotation to an axle 3a of the rear wheel 3. In this example, the secondary speed reducing mechanism 50 is provided with a gearbox 51 and a transmission mechanism 57. The gearbox 51 is a mechanism to change deceleration ratios, such as a constant-mesh gearbox and a selective-sliding gearbox.

The gearbox 51 has on the main shaft 52 plural shift gears 53a (for example, first-speed gear, second-speed gear, third/fourth-speed gear) and shift gears 53b (for example, fifth-speed gear and six-speed gear). Also, the gearbox 51 has on a countershaft 55 plural shift gears 54a (for example, first-speed gear, second-speed gear, third/fourth-speed gear) and shift gears 54b (for example, fifth-speed gear and sixth-speed gear). The shift gears 53a are spline-connected to the main shaft 52 and operate in conjunction with the main shaft 52. The shift gears 54a are provided such that they turn free to the countershaft 55, and mesh with the corresponding shift gears 53a, respectively. The shift gears 53b are provided such that they run idle with respect to the main shaft 52. The shift gears 54b mesh with the corresponding shift gears 53b, respectively, while being spline-connected to the countershaft 55 to operate in conjunction with the countershaft 55. A pair of the meshing shift gears 53a, 54a and a pair of the meshing shift gears 53b, 54b each have a different speed reduction ratio.

The gearbox 51 is also provided with a gearshift mechanism 56. The gearshift mechanism 56 includes a shift fork and a shift drum, for example, and selectively moves the shift gears 53a, 53b, 54a, 54b in the axial direction of the main shaft 52 or the countershaft 55. Then, the gearshift mechanism 56 causes the shift gears 53b, 54a, which are provided to run idle with respect to the corresponding shafts, to connect with the adjacent shift gears 53a, 54b, which operate in conjunction with the corresponding shafts. This changes the pairs of shift gears to transmit torque from the main shaft 52 to the countershaft 55. The gearshift mechanism 56 is actuated by power inputted from a shift actuator 16 to be discussed later.

The transmission mechanism 57 is designed to decelerate the rotation of the countershaft 55 and transmit the decelerated rotation to the axle 3a of the rear wheel 3. In this example, the transmission mechanism 57 includes: a drive-side member 57a (for example, drive-side sprocket), which operates in conjunction with the countershaft 55; a driven-side member 57b (for example, driven-side sprocket), which operates in conjunction with the axle 3a; and a transmission member 57c (for example, chain), which transmits torque from the drive-side member 57a to the driven-side member 57b.

Torque outputted from the engine 30 is transmitted to the drive-side member 41 of the clutch 40 via the primary speed reducing mechanism 36. The torque transmitted to the drive-side member 41 is transmitted to the axle 3a of the rear wheel 3 via the driven-side member 42, the gearbox 51, and the transmission mechanism 57, in the case that the clutch 40 is engaged or the drive-side member 41 and the driven-side member 42 contact each other, that is, the clutch 40 is in a half-clutch state.

Now, the clutch controller 10 is described. The motorcycle 1 is a semi-automatic vehicle which changes the shift gears of the gearbox 51 without the need for the rider to operate the clutch. The engagement state of the clutch 40 (stroke of the clutch 40) is controlled by the clutch controller 10. FIG. 3 is a block diagram illustrating a configuration of the clutch controller 10. As shown in FIG. 3, the clutch controller 10 is provided with a control unit 11, a storage unit 12, a clutch actuator drive circuit 13, a clutch actuator 14, a shift actuator drive circuit 15, a shift actuator 16, an accelerator operation detector 17, an engine speed detector 18, a vehicle speed detector 19, a gear position detector 21, a clutch position detector 22, and clutch rotational speed detectors 23a, 23b. The control unit 11 is connected to a shift-up switch 9a and a shift-down switch 9b.

The control unit 11 includes a central processing unit (CPU), and actuates the clutch actuator 15 and the shift actuator 16 in accordance with programs stored in the storage unit 12 to control the engagement state of the clutch 40 and the speed reduction ratios of the gearbox 51. The processing executed by the control unit 11 will be discussed in detail later.

The storage unit 12 includes a nonvolatile memory and a volatile memory, and holds in advance the programs executed by the control unit 11. Additionally, the storage unit 12 holds tables and expressions to be used for the processing executed by the control unit 11. These tables and expressions will be discussed in detail later.

The clutch actuator drive circuit 13 outputs electric power to drive the clutch actuator 14 in accordance with a signal inputted from the control unit 11. The clutch actuator 14 includes, for example, a motor and a power transmission mechanism (such as hydraulic path and wire), and is driven by receiving the electric power outputted from the clutch actuator drive circuit 13. In this example, the clutch actuator 14 presses the push rod 43 or release the pressed push rod 43 to engage or disengage the clutch 40. More specifically, the clutch actuator 14 is provided that is capable of being actuated in the disengagement direction to disengage the clutch 40 by pressing the push rod 43 or in the engagement direction to engage the clutch 40 by releasing the pressed push rod 43. The clutch actuator 14 causes the clutch 40 to be in a half-clutch state in the process of the engaging operation in which the clutch 40, which has been disengaged, is engaged. When the clutch 40 is in a half-clutch state, only part of the torque of the engine 30 is transmitted from the drive-side member 41 to the driven-side member 42.

The shift actuator drive circuit 15 outputs electric power to drive the shift actuator 16 in accordance with a signal inputted from the control unit 11. The shift actuator 16 includes, for example, a motor and a power transmission mechanism (such as hydraulic path and wire), and is driven by receiving the electric power outputted from the shift actuator drive circuit 15. The shift actuator 16 actuates the gearshift mechanism 56 of the gearbox 51 to change the pairs of shift gears to transmit toque from the main shaft 52 to the countershaft 55 in order to change the speed reduction ratios.

The accelerator operation detector 17 is designed to detect an amount of the accelerator operation by the rider (hereinafter referred to as accelerator displacement (for example, throttle opening)). Examples of the accelerator operation detector 17 are a throttle position sensor mounted to the throttle body 37 to detect a throttle opening and an accelerator position sensor mounted to the accelerator grip 5a to detect a rotation angle of the accelerator grip 5a. The accelerator operation detector 17 outputs an electric signal to the control unit 11 according to the accelerator displacement (hereinafter the electric signal is referred to as request torque signal). The control unit 11 detects the accelerator displacement by the rider based on the request torque signal.

The engine speed detector 18 is designed to detect the rotational speed of the engine 30 (hereinafter referred to as engine speed). Examples of the engine speed detector 18 are a crank angle sensor for outputting a pulse signal with a frequency according to the rotational speed of the crankshaft 34 or the primary reduction gears 36a, 36b and a tachogenerator for outputting a voltage signal according to the rotational speed thereof. The engine speed detector 18 outputs a signal to the control unit 11 according to the engine speed. The control unit 11 calculates the engine speed based on the input signal.

The vehicle speed detector 19 is designed to detect a vehicle speed, and outputs a signal to the control unit 11 according to, for example, the rotational speed of the axle 3a of the rear wheel 3 or the countershaft 55 (hereinafter the signal is referred to as vehicle speed signal). The control unit 11 calculates the vehicle speed based on the vehicle speed signal. The vehicle speed detector 19 may output a signal to the control unit 11 according to the rotational speed of the main shaft 52 as a vehicle speed signal. In this case, the control unit 11 calculates the vehicle speed not only based on the input vehicle speed signal, but also based on the speed reduction ratios of the gearbox 51 and the transmission mechanism 57.

The gear position detector 21 is designed to detect the positions of the shift gears 53a, 53b, 54a, 54b provided movably in the axial direction of the countershaft 55 or the main shaft 52. An example of the gear position detector 21 is a potentiometer mounted to the gearshift mechanism 56 or the shift actuator 16. The gear position detector 21 outputs a signal to the control unit 11 according to the positions of the shift gears 53a, 53b, 54a, 54b. Based on the input signal, the control unit 11 detects that some of the shift gears 53a, 53b, 54a, 54b, which are associated with the gear shifting, have finished moving and the speed reduction ratios have changed already.

The clutch position detector 22 is designed to detect an engagement state of the clutch 40. Examples of the clutch position detector 22 are a potentiometer for outputting a signal according to the position of the push rod 43 and a potentiometer for outputting a signal according to the position or the rotation angle of the output shaft of the clutch actuator 14. Based on the signal inputted from the clutch position detector 22, the control unit 11 detects the engagement state of the clutch 40. In other words, the control unit 11 detects the degree of the contact between the drive-side member 41 and the driven-side member 42 (the distance between the drive-side member 41 and the driven-side member 42).

The clutch rotational speed detector 23a is designed to detect the rotational speed of the drive-side member 41 of the clutch 40. Examples of the clutch rotational speed detector 23a are a rotary encoder for outputting a pulse signal with a frequency according to the rotational speed of the drive-side member 41 and a tachogenerator for outputting a voltage signal according to the rotational speed of the drive-side member 41. In turn, the clutch rotational speed detector 23b is designed to detect the rotational speed of the driven-side member 42 of the clutch 40. Examples of the clutch rotational speed detector 23b are a rotary encoder and a tachogenerator, as described for the clutch rotational speed detector 23a.

The shift-up switch 9a and the shift-down switch 9b are designed for the rider to provide instructions to change the speed reduction ratios of the gearbox 51 to the clutch controller 11. These switches 9a, 9b output a signal to the control unit 11 according to the instructions of gear shifting. The control unit 11 actuates the shift actuator 16 according to the input signal to change the pairs of the shift gears to transmit torque from the main shaft 52 to the countershaft 55.

Now, description is made of the control of the clutch 40 by means of the clutch controller 10 and the basic idea for such control.

The conventional clutch controller controls the engagement state of the clutch based on the difference in rotational speed between the drive-side member and the driven-side member of the clutch. Therefore, other technologies have been proposed to reduce the time period spent for clutch engaging operation (from the point in time when the drive-side member and the driven-side member are apart from each other to the point in time when these members are pressed against each other), and to improve riding comfort during the clutch engaging operation or reduce shocks and the deceleration feeling (see JP-A-2001-146930). However, there is a trade-off relationship between the reduction in time period spent for clutch engaging operation and the improvement in riding comfort. This restricts the reduction in time period spent for clutch engaging operation. In other words, to engage the clutch in a short time period causes shocks to the vehicle, and on the other hand, to reduce the shocks requires a longer time period to engage the clutch.

The present inventor focused attention not on the time period actually spent for engaging the drive-side member with the driven-side member, but on the clutch engagement time period perceived by the rider. Then, the present inventor found that the rider perceives the clutch engagement time period due to the deceleration of the vehicle caused by disengagement of the clutch or a half-clutch state, as well as due to the slight shocks generated when the drive-side member and the driven-side member are completely engaged. In other words, the rider perceives the time period from the point in time when the vehicle starts decelerating to the point in time when slight shocks are generated when the drive-side member and the driven-side member are completely engaged, as a time period spent for engaging the clutch. In addition, the present inventor found that these deceleration and shocks are caused by changes in torque transmitted from the drive-side member to the driven-side member of the clutch. More specifically, the vehicle decelerates with a decrease in torque transmitted from the drive-side member to the driven-side member, and shocks are generated with an increase in torque at the time when the drive-side member and the driven-side member are completely engaged.

Thus, the clutch controller 10 described as an example of the embodiment of the invention obtains torque transmitted from the drive-side member 41 of the clutch 40 to the downstream mechanism (such as the driven-side member 42 and the secondary speed reducing mechanism 50 in FIG. 2 (hereinafter referred to as downstream transmission mechanism)) in the torque transmission path including the driven-side member 42 (hereinafter the torque is referred to as actual transmission torque Tac). In addition, the clutch controller 10 estimates torque to be transmitted to the downstream transmission mechanism after the drive-side member 41 and the driven-side member 42 are completely engaged. Then, the clutch controller 10 defines the estimated torque as target transmission torque Ttg, and controls the engagement state of the clutch 40 during engaging operation of the clutch 40 (when the clutch 40 is in a half-clutch state) such that the actual transmission torque Tac approximates the target transmission torque Ttg.

Thereby, the actual transmission torque Tac is prevented from excessively decreasing during engaging operation of the clutch, thus reducing the vehicle deceleration feeling during the engaging operation. In addition, the actual transmission torque Tac is prevented from changing at the time when the clutch is completely engaged, thus reducing the shocks generated at that time. Consequently, the rider perceives that it takes less time to engage the clutch. FIG. 4 is an explanatory view showing changes in actual transmission torque Tac with respect to time during engaging operation of the clutch 40. At the time t1, the actual transmission torque Tac decreases to 0 temporarily because the clutch 40 is disengaged. After that, the clutch controller 10 estimates torque at the time when the clutch 40 is completely engaged (at the time t4 in FIG. 4) and defines the estimated torque as target transmission torque Ttg. At the time t2, when the clutch controller 10 starts actuating the clutch 40 in the direction to engage the clutch 40, the clutch 40 is in a half-clutch state. When the clutch 40 is in a half-clutch state, the clutch controller 10 controls the engagement state of the clutch 40 such that the actual transmission torque Tac reaches the target transmission torque Ttg. As a result of this control, at the time t3, the actual transmission torque Tac is equal to the target transmission torque Ttg and corresponds with the torque to be obtained after completion of the clutch engagement. After that, the clutch 40 is completely engaged at the time t4, and thus the half-clutch state is discontinued. Because the actual transmission torque Tac has been already equal to the target transmission torque Ttg, the current actual transmission torque Tac is prevented from changing, thus reducing the shocks to the vehicles. Up to this point, the basic idea for the control of the clutch 40 by means of the clutch controller 10 has been discussed. Hereinafter, the control of the clutch 40 by means of the clutch controller 10 will be described in details.

FIG. 5 is a block diagram illustrating functions of the control unit 11. The functions of the control unit 11 include an actual torque obtaining section 11a, a target torque obtaining section 11b, a clutch actuator control section 11c, and a shift actuator control section 11d.

The actual torque obtaining section 11a obtains actual transmission torque Tac in a predetermined sampling cycle (for example, several milliseconds) during engaging operation of the clutch 40 in which the drive-side member 41 and the driven-side member 42 approach each other. This processing is executed as follows, for example.

In the description herein, the actual transmission torque Tac is referred to as torque transmitted from the drive-side member 41 to the driven-side member 42.

The actual torque obtaining section 11a calculates the actual transmission torque Tac based on the torque outputted from the engine 30 (hereinafter referred to as EG torque TEac) and based on the inertia torque produced on a mechanism upstream of the drive-side member 41 (such as the crankshaft 34, the piston 32 and the primary speed reducing mechanism 36 (hereinafter referred to as engine-side mechanism)) in the torque transmission path (hereinafter the inertia torque is referred to as EG-side inertia torque Tlac). The EG-side inertia torque Tlac is a value obtained by multiplying the inertia moment I on the engine-side mechanism by the variation in engine speed Ωe per unit time, dΩe / dt. The inertia moment I is calculated in advance, for example, in the stage of manufacturing the engine 30.

Description is first made of an example of the processing for obtaining the EG torque TEac. The actual torque obtaining section 11a obtains the EG torque TEac based on the accelerator displacement Aop, detected by the accelerator operation detector 17, and based on the engine speed Ωe detected by the engine speed detector 18. For example, the storage unit 12 stores in advance a table that establishes the correspondence between the EG torque TEac, and the engine speed Ωe and the accelerator displacement Aop (hereinafter the table is referred to as EG torque table). Then, the actual torque obtaining section 11a detects the accelerator displacement Aop based on the request torque signal inputted from the accelerator operation detector 17, while detecting the engine speed Ωe based on the signal inputted from the engine speed detector 18. Then, the actual torque obtaining section 11a refers to the EG torque table to obtain the EG torque TEac that corresponds to the detected accelerator displacement Aop and engine speed Ωe. The storage unit 12 may store in advance an expression that represents the relationship between the engine speed Ωe, the accelerator displacement Aop and the EG torque TEac (hereinafter the expression is referred to as EG torque relational expression). In this case, the actual torque obtaining section 11a substitutes the detected engine speed Ωe and accelerator displacement Aop into the EG torque relational expression in order to calculate the EG torque TEac.

Now, description is made of an example of the processing for obtaining the EG-side inertia torque Tlac. The actual torque obtaining section 11a obtains the EG-side inertia torque Tlac based on the engine speed Ωe. Specifically, the actual torque obtaining section 11a calculates a variation in engine speed Ωe per unit time (hereinafter the variation is referred to as EG speed variation dΩe / dt) based on the signal inputted from the engine speed detector 18. Then, a value, which is obtained by multiplying the EG speed variation dΩe / dt by the inertia moment on the engine-side mechanism (hereinafter referred to as engine-side inertia moment I), is defined as EG-side inertia torque Tlac (Tlac = I × dΩe / dt). Alternatively, the storage unit 12 may store in advance a table that establishes the correspondence between the EG speed variation dΩe / dt and the EG-side inertia torque Tlac. In this case, the actual torque obtaining section 11a refers to the table to obtain the EG-side inertia torque Tlac that corresponds to the EG speed variation dΩe / dt.

Then, the actual torque obtaining section 11a subtracts the EG-side inertia torque Tlac, produced due to changes in engine speed Ωe, from the EG torque TEac, obtained from the aforementioned processing, in order to calculate the actual transmission torque Tac. For example, the actual torque obtaining section 11a substitutes the EG torque TEac and the EG-side inertia torque Tlac into the following expression (1) stored in advance in the storage unit 12 in order to calculate the actual transmission torque Tac.

$$Tac = (TEac - Tlac) \times Pratio \cdots (1)$$

Where Pratio is the speed reduction ratio of the primary speed reducing mechanism 36 (Pratio = the number of teeth of the driven-side primary reduction gear 36b / the number of teeth of the drive-side primary reduction gear 36a).

The processing executed by the actual torque obtaining section 11a is not limited to this. For example, in the above description, the actual torque obtaining section 11a calculates the actual transmission torque Tac. More specifically, after obtaining the EG torque TEac and the EG-side inertia torque Tlac, the actual torque obtaining section 11a subtracts the obtained EG-side inertia torque Tlac from the obtained EG torque TEac, and multiplies the subtraction result by the speed reduction ratio Pratio of the primary speed reducing mechanism 36. However, for example, the storage unit 12 may store in advance a table or an expression that establishes the correspondence between the actual transmission torque Tac, and the engine speed Ωe, the accelerator displacement Aop and the EG speed variation dΩe / dt. In this case, the actual torque obtaining section 11a uses the table or the expression to directly obtain the actual transmission torque Tac that corresponds to the engine speed Ωe, the EG speed variation dΩe / dt and the accelerator displacement Aop.

Alternatively, the actual torque obtaining section 11a may obtain the EG torque TEac based on pressure of air flowing through the interior of the intake pipe 35 (hereinafter the pressure is referred to as intake pressure) (see FIG. 2). For example, the storage unit 12 stores a table that establishes the correspondence between the EG torque TEac, and the intake pressure and the engine speed Ωe. In addition, a pressure sensor for outputting a signal according to the intake pressure is disposed in the intake pipe 35. In this case, the actual torque obtaining section 11a detects the intake pressure based on the signal inputted from the pressure sensor at the time when the crank angle is a predetermined value (for example, at the end of intake stroke), while detecting the engine speed Ωe based on the signal inputted from the engine speed detector 18. Then, the actual torque obtaining section 11a refers to the table stored in the storage unit 12 to obtain the EG torque TEac that corresponds to the detected intake pressure and engine speed Ωe.

A torque detector may be provided in advance for outputting an electric signal according to the torque transmitted to the driven-side member 42. Then, the actual torque obtaining section 11a obtains the actual transmission torque Tac transmitted to the driven-side member 42 based on the signal inputted from the torque detector. An example of the torque detector is a sensor for outputting an electric signal according to the strain stress on the main shaft 52 to which torque is transmitted.

Now, description is made of the processing executed by the target torque obtaining section 11b. The target torque obtaining section 11b obtains torque, which is supposed to be transmitted from the drive-side member 41 to the driven-side member 42 of the clutch 40, as target transmission torque Ttg. As described above, specifically, the target torque obtaining section 11b estimates torque to be transmitted from the drive-side member 41 to the driven-side member 42 after the drive-side member 41 and the driven-side member 42 are completely engaged, and defines the estimated torque as target transmission torque Ttg. The wording, when the drive-side member 41 and the driven-side member 42 are completely engaged, means the point in time when there is no difference in rotational speed between the drive-side member 41 and the driven-side member 42 (hereinafter referred to as clutch rotational speed difference Ωdiff) or the point in time when the clutch rotational speed difference Ωdiff is equal to or below a predetermined value. The target torque obtaining section 11b executes the following processing, for example.

The target torque obtaining section 11b estimates torque to be outputted from the engine 30 after completion of the clutch engagement (hereinafter the torque is referred to as post-completion EG torque TEfin). In addition, the target torque obtaining section 11b estimates inertia torque to be produced on the engine-side mechanism after completion of the clutch engagement (hereinafter the inertia torque is referred to as post-completion EG-side inertia torque TIfin). Then, the target torque obtaining section 11b obtains the target transmission torque Ttg based on the estimated post-completion EG-side inertia torque TIfin and post-completion EG torque TEfin.

Description is first made of the processing for estimating the post-completion EG torque TEfin. The target torque obtaining section 11b estimates the engine speed Ωefin after completion of the clutch engagement based on the rotational speed of the downstream transmission mechanism, which is obtained before engaging operation of the clutch 40 starts or during the engaging operation. Then, the target torque obtaining section 11b estimates the post-completion EG torque TEfin based on the estimated engine speed Ωefin and the accelerator displacement Aop obtained before engaging operation of the clutch starts or during the engaging operation.

For example, the target torque obtaining section 11b obtains the rotational speed of the driven-side member 42 that forms the downstream transmission mechanism, while obtaining the rotational speed of the drive-side member 41, in order to calculate the difference in rotational speed between these members or the clutch rotational speed difference Ωdiff. In addition, the target torque obtaining section 11b obtains the engine speed Ωe based on the signal inputted from the engine speed detector 18. Then, the target torque obtaining section 11b estimates the engine speed Ωefin after completion of the clutch engagement based on the clutch rotational speed difference Ωdiff and the engine speed Ωe. In other words, the engine speed Ωefin after completion of the clutch engagement depends on the engine speed Ωe and the rotational speed of the downstream transmission mechanism, which are obtained before engaging operation of the clutch 40 starts or during the engaging operation. More specifically, a value of the engine speed Ωefin after completion of the clutch engagement is estimated to change from the engine speed Ωe during engaging operation of the clutch by an amount depending on the clutch rotational speed difference Ωdiff. Thus, the target torque obtaining section 11b substitutes the clutch rotational speed difference Ωdiff and the engine speed Ωe, which are obtained during engaging operation of the clutch 40, into the following expression (2) in order to calculate the engine speed Ωefin.

$$\Omega efin = \Omega e - \Omega diff \times Pratio \cdots (2)$$

Then, the target torque obtaining section 11b detects the accelerator displacement Aop by the rider based on the request torque signal inputted from the accelerator operation detector 17 during engaging operation of the clutch 40, and refers to the aforementioned EG torque table to define the torque that corresponds to the detected accelerator displacement Aop and the calculated engine speed Ωefin as post-completion EG torque TEfin.

Now, description is made of the processing for estimating the post-completion EG-side inertia torque TIfin. A variation in engine speed Ωefin per unit time, dΩefin / dt, after completion of the clutch engagement depends on the variation in rotational speed of the downstream transmission mechanism per unit time obtained before engaging operation of the clutch 40 starts or during the engaging operation. For example, as the variation in rotational speed of the downstream transmission mechanism during engaging operation of the clutch 40 is larger, the variation dΩefin / dt in engine speed Ωefin after completion of the clutch engagement is larger, accordingly. Consequently, the post-completion EG-side inertia torque TIfin is estimated to be larger. Thus, the target torque obtaining section 11b estimates the post-completion EG-side inertia torque TIfin based on the variation in rotational speed of the downstream transmission mechanism obtained before engaging operation of the clutch 40 starts or during the engaging operation.

For example, the target torque obtaining section 11b calculates a variation in rotational speed Ωcl of the downstream transmission mechanism or the driven-side member 42 per unit time (hereinafter the variation is referred to as driven-side rotational speed variation dΩcl / dt) based on the signal inputted from the clutch rotational speed detector 23b. Then, the target torque obtaining section 11b substitutes the driven-side rotational speed variation dΩcl / dt into the following expression (3), for example, in order to calculate the post-completion EG-side inertia torque TIfin.

$$TIfin = d\Omega cl / dt \times Pratio \times I \cdots (3)$$

Where I is the EG-side inertia moment and Pratio is the speed reduction ratio of the primary speed reducing mechanism 36, as described above.

Alternatively, the target torque obtaining section 11b may execute this processing for calculating the post-completion EG-side inertia torque TIfin only before engaging operation of the clutch 40 starts or in a predetermined cycle during the engaging operation. More specifically, the target torque obtaining section 11b calculates the driven-side rotational speed variation dΩcl / dt in a predetermined sampling cycle, for example, during engaging operation of the clutch 40, and obtains the post-completion EG-side inertia torque TIfin based on the calculated driven-side rotational speed variation dΩcl / dt. Then, the target torque obtaining section 11b uses the sequentially-calculated post-completion EG-side inertia torque TIfin to calculate the target transmission torque Ttg. The calculation in such a manner allows a deviation between the target transmission torque Ttg and the actual transmission torque Tac to be reduced at the time of completely engaging the clutch 40.

In addition, the target torque obtaining section 11b may calculate the driven-side rotational speed variation dΩcl / dt based on the signal inputted from the clutch rotational speed detector 23b immediately before the clutch 40 is disengaged (for example, several hundred milliseconds before the clutch 40 starts being disengaged) in the processing executed by the clutch actuator control section 11c. The clutch actuator control section 11c will be discussed later. Then, the target torque obtaining section 11b may calculate the post-completion EG-side inertia torque TIfin based on the calculated driven-side rotational speed variation dΩcl / dt, and in the process of the engaging operation of the clutch 40, may use the calculated post-completion EG-side inertia torque TIfin to calculate the target transmission torque Ttg. Thereby, the processing load is reduced in the process of the engaging operation of the clutch 40.

The processing for obtaining the post-completion EG-side inertia torque TIfin is not limited to the aforementioned processing based on the rotational speed Ωcl of the driven-side member 42. For example, the motorcycle 1 may be provided with a detector for detecting the rotational speed of the countershaft 55. In this case, the target torque obtaining section 11b calculates a variation in rotational speed Ωcout of the countershaft 55 per unit time, dΩcout / dt. Then, the target torque obtaining section 11b substitutes the variation dΩcout / dt in rotational speed of the countershaft 55 into the following expression (4), for example, in order to calculate the post-completion EG-side inertia torque TIfin.

$$TIfin = d\Omega cout / dt \times Pratio \times Mratio \times I \cdots (4)$$

Where Mratio is the speed reduction ratio of the gearbox 51 (the number of teeth of the shift gears 54a, 54b / the number of teeth of the shift gears 53a, 53b) after completion of the clutch engagement.

Alternatively, the target torque obtaining section 11b may obtain the post-completion EG-side inertial torque TIfin based on the vehicle speed signal inputted from the vehicle speed detector 19. Specifically, the target torque obtaining section 11b calculates a variation in rotational speed Ωfinal of the axle 3a per unit time, dΩfinal / dt, based on the vehicle speed signal. Then, the target torque obtaining section 11b may substitute the variation dΩfinal / dt in rotational speed of the axle 3a into the following expression (5), for example, in order to calculate the post-completion EG-side inertia torque TIfin.

$$TIfin = d\Omega final / dt \times Pratio \times Mratio \times Tratio \times I \cdots (5)$$

Where Tratio is the speed reduction ratio of the transmission mechanism 57.

Now, description is made of the processing for obtaining the target transmission torque Ttg based on the post-completion EG torque TEfin and the post-completion EG-side inertia torque TIfin. The target torque obtaining section 11b subtracts the post-completion EG-side inertia torque TIfin from the post-completion EG torque TEfin, which are both obtained from the aforementioned processing, in order to calculate the target transmission torque Ttg. For example, the target torque obtaining section 11b substitutes the post-completion EG torque TEfin and the post-completion EG-side inertia torque TIfin into the following expression (6) in order to calculate the target transmission torque Ttg.

$$Ttg = (TEfin - TIfin) \times Pratio \cdots (6)$$

Alternatively, the target torque obtaining section 11b may correct the subtraction result, obtained by subtracting the post-completion EG-side inertia torque TIfin from the post-completion EG torque TEfin, and provide the corrected result for the processing for calculating the target transmission torque Ttg. For example, the target torque obtaining section 11b substitutes the post-completion EG torque TEfin and the post-completion EG-side inertia torque TIfin into the following expression (7) in order to calculate the target transmission torque Ttg.

$$Ttg = (TEfin - TIfin) \times Ka \times Pratio \cdots (7)$$

Where Ka is a correction value. For example, the correction value Ka is determined according to the accelerator displacement Aop, which is detected based on the signal inputted from the accelerator operation detector 17, and is preset such that the correction value Ka increases in proportion to the accelerator displacement Aop. Therefore, as the accelerator displacement Aop increases, the target transmission torque Ttg, which is supposed to be transmitted from the drive-side member 41 to the downstream transmission mechanism, is preset higher, so that the rider can obtain acceleration feeling according to the rider's accelerator operation.

In the process of the engaging operation of the clutch 40, the target torque obtaining section 11b executes the aforementioned processing for estimating the post-completion EG torque TEfin and the aforementioned processing for estimating the post-completion EG-side inertia torque TIfin in a predetermined sampling cycle, in order to obtain the target transmission torque Ttg based on the estimated post-completion EG torque TEfin and post-completion EG-side inertia torque TIfin. Thereby, in the process of the engaging operation of the clutch 40, the target transmission torque Ttg changes gradually depending on the rider's accelerator operation or running conditions of the vehicle, so that operability of the vehicle improves.

The processing executed by the target torque obtaining section 11b is not limited to the aforementioned processing. For example, in the above description, after calculating the post-completion EG torque TEfin and the post-completion EG-side inertia torque TIfin, the target torque obtaining section 11b subtracts the post-completion EG-side inertial torque TIfin from the post-completion EG torque TEfin to obtain the target transmission torque Ttg. However, the target torque obtaining section 11b may obtain the target transmission torque Ttg directly from a value detected by the respective detectors. More specifically, the storage unit 12 stores in advance an expression that associates the accelerator displacement Aop, the clutch rotational speed difference Ωdiff, the driven-side rotational speed variation dΩcl / dt, and the engine speed Ωe with the target transmission torque Ttg. Then, the target torque obtaining section 11b may substitute the detected accelerator displacement Aop, clutch rotational speed difference Ωdiff, driven-side rotational speed variation dΩcl / dt and engine speed Ωe into the expression to calculate the target transmission torque Ttg.

Alternatively, the target torque obtaining section 11b may obtain the target transmission torque Ttg based on the accelerator displacement Aop in the process of the engaging operation of the clutch 40 and based on the actual transmission torque Tac before the clutch actuator control section 11c starts disengaging the clutch 40. This processing is executed as follows, for example.

The storage unit 12 stores in advance a table that establishes the correspondence between the target transmission torque Ttg, and the accelerator displacement Aop and the actual transmission torque Tac or an expression that represents the relationship between the accelerator displacement Aop, the actual transmission torque Tac and the target transmission torque Ttg. For example, in the table and the expression, as the accelerator displacement Aop and the actual transmission torque Tac increase, the target transmission torque Ttg increases. When a gear shifting command signal is inputted from the shift-up switch 9a or the shift-down switch 9b, the target torque obtaining section 11b obtains the actual transmission torque Tac before the clutch 40 is disengaged in the processing executed by the clutch actuator control section 11c. The processing for obtaining the actual transmission torque Tac is performed in the same manner as the aforementioned processing by the actual torque obtaining section 11a, for example. In the process of the engaging operation of the clutch 40, the target torque obtaining section 11b detects the accelerator displacement Aop by the rider in a predetermined sampling cycle. Then, the target torque obtaining section 11b uses the table or the expression stored in the storage unit 12 to obtain the target transmission torque Ttg that corresponds to the detected accelerator displacement Aop and the actual transmission torque Tac obtained before the clutch 40 is disengaged.

Alternatively, the target torque obtaining section 11b may obtain the target transmission torque Ttg based on the intake pressure. This processing is executed as follows, for example. The storage unit 12 stores in advance a table that establishes the correspondence between the torque of the engine 30, and the intake pressure and the engine speed Ωe. In the processing for calculating the post-completion EG torque TEfin, the target torque obtaining section 11b estimates the engine speed Ωefin after completion of the clutch engagement in the same manner as the aforementioned processing. In addition, the target torque obtaining section 11b detects the intake pressure at the time when the crank angle is a predetermined value (for example, at the end of intake stroke). Then, the target torque obtaining section 11b may refer to the table stored in the storage unit 12 to obtain torque that corresponds to the detected intake pressure and the estimated engine speed Ωefin in order to define the obtained torque as post-completion EG torque TEfin.

The clutch actuator control section 11c actuates the clutch actuator 14 to control the engagement state of the clutch 40 based on the actual transmission torque Tac obtained by the actual torque obtaining section 11a. Specifically, the clutch actuator control section 11c actuates the clutch actuator 14 in a predetermined cycle (for example, a cycle for calculating the actual transmission torque Tac and the target transmission torque Ttg) by an actuation amount according to the difference between the actual transmission torque Tac and the target transmission torque Ttg (hereinafter referred to as torque deviation ΔT (ΔT = Ttg - Tac)). The clutch actuator control section 11c executes the following processing, for example.

The storage unit 12 stores in advance an expression that represents the relationship between the torque deviation ΔT and the actuation amount of the clutch actuator 14 (hereinafter the expression is referred to as actuation amount relational expression). The clutch actuator control section 11c calculates the torque deviation ΔT every time the actual torque obtaining section 11a obtains the actual transmission torque Tac. Then, the clutch actuator control section 11c substitutes the calculated torque deviation ΔT into the actuation amount relational expression in order to obtain the amount by which the clutch actuator 14 is to be actuated (hereinafter the amount is referred to as command actuation amount), and outputs a signal to the clutch actuator drive circuit 13 according to the command actuation amount. The clutch actuator drive circuit 13 supplies electric power to the clutch actuator 14 according to the input signal. The clutch actuator 14 is actuated by the command actuation amount during the aforementioned cycle. Then, the pressing force between the drive-side member 41 and the driven-side member 42 is varied by an amount according to the actuation amount of the clutch actuator 14, so that the engagement state of the clutch 40 changes.

For example, the command actuation amount is preset larger as the torque deviation ΔT increases. FIG. 6 is a graph showing the relationship between the torque deviation ΔT (ΔT = Ttg - Tac) and the command actuation amount obtained from the actuation amount relational expression. In an example shown in FIG. 6, the actuation amount relational expression is established such that if the torque deviation ΔT is positive, the clutch actuator 14 is actuated in the direction to engage the clutch 40. In turn, the actuation amount relational expression is established such that if the torque deviation ΔT is negative, the clutch actuator 14 is actuated in the direction to disengage the clutch 40. In addition, the actuation amount relational expression is established such that the command actuation amount increases in proportion to the torque deviation ΔT. As described above, the command actuation amount is an amount by which the clutch actuator 14 is actuated during one cycle, and the command actuation amount is preset in such a manner that it increases in proportion to the torque deviation ΔT. This makes it possible to increase the speed at which the clutch actuator 14 operates, if the torque deviation ΔT is large.

The relationship between the torque deviation ΔT and the command actuation amount is not limited to the relationship shown in FIG. 6. For example, the actuation amount relational expression may be established such that the command actuation amount is proportional to the square of the torque deviation ΔT.

Further, in place of the actuation amount relational expression, the storage unit 12 may store a table that establishes the correspondence between the command actuation amount and the torque deviation ΔT (hereinafter the table is referred to as actuation amount table). In this case, the clutch actuator control section 11c refers to the actuation amount table to obtain the command actuation amount that corresponds to the torque deviation ΔT. Alternatively, the actuation amount table may establish the correspondence between the command actuation amount, and the target transmission torque Ttg and the actual transmission torque Tac. In this case, the clutch actuator control section 11c refers to the actuation amount table, without calculating the torque deviation ΔT, to directly obtain the command actuation amount that corresponds to the target transmission torque Ttg and the actual transmission torque Tac.

Alternatively, the clutch actuator control section 11c may correct the command actuation amount based on a predetermined correction value depending on the engagement state of the clutch 40 (hereinafter the correction value is referred to as actuation amount correction value Km). FIG. 7 is a graph showing an example of the relationship between the actuation amount correction value Km and the engagement state of the clutch 40, in which the horizontal axis represents the engagement state of the clutch 40 and the vertical axis represents the actuation amount correction value Km. In the graph, an actuation amount correction value C1 when the clutch 40 is disengaged is preset larger than an actuation amount correction value C2 when the clutch 40 is engaged. In addition, when the position of the clutch 40 (the positional relationship between the drive-side member 41 and the driven-side member 42) is between P1 and P2, the actuation amount correction value Km is preset larger as the clutch actuator 14 is actuated in the direction to disengage the clutch 40. In the case where the actuation amount correction value Km is preset in this manner, the clutch actuator control section 11c multiplies the difference between the target transmission torque Ttg and the actual transmission torque Tac by the actuation amount correction value Km, for example, and refers to the aforementioned actuation amount table and actuation amount relational expression to obtain the command actuation amount that corresponds to the multiplication result ((Ttg - Tac) × Km).

When the rider provides gear shifting instructions, the clutch actuator control section 11c actuates the clutch actuator 14 to disengage the clutch 40 in order to temporarily interrupt torque transmission from the drive-side member 41 to the driven-side member 42. After that, the clutch actuator control section 11c detects that some of the shift gears 53a, 53b, 54a, 54b, which are associated with the gear shifting instructions, have been moved already based on the signal inputted from the gear position detector 21, and then executes the aforementioned processing. More specifically, according to the obtained command actuation amount, the clutch actuator control section 11c actuates the clutch actuator 14 in the direction to engage the clutch 40.

When the rider operates the shift-up switch 9a or the shift-down switch 9b to provide gear shifting instructions, the shift actuator control section 11d actuates the shift actuator 16 to change the pairs of shift gears to transmit torque. Specifically, after detecting that the clutch 40 is disengaged based on the signal inputted from the clutch position detector 22, the shift actuator control section 11d outputs a signal to the shift actuator drive circuit 15 according to the rider's gear shifting instructions. Thereby, the shift actuator drive circuit 15 supplies electric power to actuate the shift actuator 16, in order to move some of the shift gears 53a, 53b, 54a, 54b according to the gear shifting instructions.

Now, description is made of the flow of the processing executed by the control unit 11. FIG. 8 is a flowchart showing an example of the processing executed by the control unit 11. Here, the processing executed by the control unit 11 at gear shifting is described as an example.

The clutch actuator control section 11c determines whether or not a gear shifting command signal is inputted from the shift-up switch 9a or the shift-down switch 9b (S101). If no gear shifting command signal is inputted, the clutch actuator control section 11c waits until the gear shifting command signal is inputted. When the gear shifting command signal is inputted, the clutch actuator control section 11c actuates the clutch actuator 14 to disengage the clutch 40 (S102). After detecting that the clutch 40 is disengaged based on the signal inputted from the clutch position detector 22, the shift actuator control section 11d actuates the shift actuator 16 to move some of the shift gears 53a, 53b, 54a, 54b, which are associated with the gear shifting command, in order to change the speed reduction ratios of the gearbox 51 (S103). After detecting that some of the shift gears 53a, 53b, 54a, 54b have been moved already based on the signal inputted from the gear position detector 21, the clutch actuator control section 11c executes the processing for engaging the clutch 40 that has been disengaged.

Specifically, the target torque obtaining section 11b obtains the target transmission torque Ttg (S104). For example, the target torque obtaining section 11b detects the accelerator displacement Aop based on the request torque signal inputted from the accelerator operation detector 17, while detecting the rotational speed Ωcl of the driven-side member 42 based on the signal inputted from the clutch rotational speed detector 23b. Then, based on the detected rotational speed Ωcl, the variation dΩcl / dt in rotational speed Ωcl per unit time, and the detected accelerator displacement Aop, the target torque obtaining section 11b estimates torque, which is supposed to be transmitted to the driven-side member 42 after completion of the clutch engagement, and defines the estimated torque as target transmission torque Ttg.

In turn, the actual torque obtaining section 11a obtains the actual transmission torque Tac currently transmitted from the drive-side member 41 to the driven-side member 42 (step S105). For example, the actual torque obtaining section 11a detects the engine speed Ωe, while calculating the variation in engine speed Ωe per unit time or EG speed variation dΩe / dt. Then, the actual torque obtaining section 11a obtains the actual transmission torque Tac based on the engine speed Ωe and the EG speed variation dΩe /dt.

After that, the clutch actuator control section 11c obtains the amount by which the clutch actuator 14 is to be actuated, that is, the command actuation amount based on the target transmission torque Ttg obtained in the step S104 and the actual transmission torque Tac obtained in the step S105, and outputs a signal to the clutch actuator drive circuit 15 according to the obtained command actuation amount (S106). Consequently, the drive-side member 41 and the driven-side member 42 approach each other, so that the clutch 40 is in a half-clutch state.

Then, the clutch actuator control section 11c calculates the difference in rotational speed between the drive-side member 41 and the driven-side member 42 (the clutch rotational speed difference Ωdiff) based on the signals inputted from the clutch rotational speed detectors 23a, 23b, and determines whether or not the calculated clutch rotational speed difference Ωdiff is smaller than a predetermined value (hereinafter referred to as speed difference for discontinuing half-clutch) (S107). Alternatively, the clutch actuator control section 11c may determine whether or not the clutch rotational speed difference Ωdiff continues to be smaller than the speed difference for discontinuing half-clutch for a given time period. In the step S107, if the clutch rotational speed difference Ωdiff is equal to or greater than the speed difference for discontinuing half-clutch, the control unit 11 returns to the step S104 to reexecute the subsequent processing steps. When the clutch 40 is in a half-clutch state, the control unit 11 repeats the steps S104 to S106 in a predetermined cycle. This allows the actual transmission torque Tac to follow the target transmission torque Ttg. In contrast, in the step S107, if the clutch rotational speed difference Ωdiff is smaller than the speed difference for discontinuing half-clutch, the clutch actuator control section 11c actuates the clutch actuator 14 to discontinue the half-clutch state of the clutch 40 and engage the clutch 40 completely (S108). The aforementioned processing is an example of the processing executed by the control unit 11 at gear shifting.

Now, description is made of the results of the processing executed by the control unit 11. FIG. 9 is a time chart to illustrate the results of the processing executed at gear changes, wherein FIG. 9(a) shows changes in engagement state of the clutch 40 with respect to time; FIG. 9(b) shows changes in target transmission torque Ttg with respect to time; FIG. 9(c) shows changes in actual transmission torque Tac with respect to time; FIG. 9(d) shows changes in torque transmitted to the axle 3a with respect to time; and FIG. 9(e) shows changes in engine speed Ωe with respect to time. The description herein is made of an example in which the gearbox 51 is shifted-up, and the torque, transmitted to the axle 3a of the rear wheel 3 after the gear shifting, decreases compared to before the gear shifting.

When the shift-up switch 9a inputs a gear shifting command signal at the time t1, the clutch actuator control section 11c executes the processing to actuate the clutch actuator 14, so that the clutch 40 is disengaged as shown in FIG. 9(a). At this time, as shown in FIGs. 9(c) and 9(d), the actual transmission torque Tac transmitted from the drive-side member 41 to the driven-side member 42 of the clutch 40 and the torque transmitted to the axle 3a are 0. In turn, as shown in FIG. 9(e), the engine speed increases slightly because the load on the engine 30 is eliminated (see time t2). After that, at the time t3, when some of the shift gears 53a, 53b, 54a, 54b have been moved already in the processing executed by the shift actuator control section 11d, the torque estimated to be transmitted to the driven-side member 42 after completion of the clutch engagement is preset as target transmission torque Ttg, as shown in FIG. 9(c). In addition, the clutch actuator 14 starts being actuated by the command actuation amount according to the torque deviation ΔT. Consequently, as shown in FIG. 9(a), the clutch 40 is in half-clutch state in which the drive-side member 41 and the driven-side member 42 contact each other. As shown in FIGs. 9(c) and 9(d), the actual transmission torque Tac transmitted to the driven-side member 42 and the torque transmitted to the axle 3a start increasing. Then, at the time t4, the target transmission torque Ttg and the actual transmission torque Tac are equal to each other. As shown in FIG. 9(d), the torque, estimated to be transmitted at the time when the drive-side member 41 and the driven-side member 42 are completely engaged (at the time t5 in FIGs. 9(a)-9(e)), is transmitted to the axle 3a and the driven-side member 42 at the time t4. From the time t3 to the time t4, as the torque deviation ΔT is gradually smaller, the displacement of the clutch 40 per unit time is gradually smaller, accordingly, as shown in FIG. 9(a). In addition, as shown in FIG. 9(e), because at the time of shift-up operation, normally the rotational speed of the driven-side member 42 is lower than the rotational speed of the drive-side member 41, the engine speed Ωe decreases moderately.

After that, the actual transmission torque Tac and the target transmission torque Ttg continue to be equal to each other, and therefore, the engagement state of the clutch 40 is maintained. After that, at the time t5, when the clutch rotational speed difference Ωdiff is smaller than the aforementioned speed difference for discontinuing half-clutch, the clutch actuator control section 11c actuates the clutch actuator 14 to completely engage the driven-side member 42 with the drive-side member 41 and discontinue the half-clutch state. At this time, as shown in FIGs. 9(c) and 9(d), the torque transmitted to the driven-side member 42 and the axle 3a remains unchanged and is maintained at the level at the time t4. In FIGs. 9(a) to 9(e), when the clutch 40 is in a half-clutch state, the target transmission torque Ttg is constant. However, in case the rider increases the accelerator displacement Aop when the clutch 40 is in a half-clutch state, the target transmission torque Ttg, obtained by the target torque obtaining section 11b, changes, accordingly. In this case, the clutch actuator control section 11c controls the engagement state of the clutch 40 such that the actual transmission torque Tac follows the target transmission torque Ttg.

The above-mentioned clutch controller 10 is provided with: the actual torque obtaining section 11a for obtaining torque transmitted from the drive-side member 41 to the driven-side member 42 of the clutch 40 as actual transmission torque Tac; the target torque obtaining section 11b for obtaining torque, which is supposed to be transmitted from the drive-side member 41 to the driven-side member 42, as target transmission torque Ttg; and the clutch actuator control section 11c for actuating the clutch actuator 14 by the actuation amount according to the difference between the actual transmission torque Tac and the target transmission torque Ttg (torque deviation ΔT). This allows appropriate torque to be transmitted to the driven-side member 42 during engaging operation of the clutch 40, and thus improves the riding comfort of the vehicle during the engaging operation.

In the clutch controller 10, the actual torque obtaining section 11a obtains the actual transmission torque Tac based on the EG torque TEac outputted from the engine 30 and based on the EG-side inertia torque TIac produced on the mechanism upstream of the drive-side member 41 (the engine-side mechanism) in the torque transmission path. The actual transmission torque Tac is thus obtained without providing any specific sensor for outputting a signal according to the actual transmission torque Tac.

Further, in the clutch controller 10, the target torque obtaining section 11b estimates the torque to be transmitted from the drive-side member 41 to the downstream transmission mechanism after the drive-side member 41 and the driven-side member 42 are completely engaged, and defines the estimated torque as target transmission torque Ttg. This reduces the shocks generated when the drive-side member 41 and the driven-side member 42 are completely engaged, and thus improves the riding comfort of the vehicle at the time when engaging operation of the clutch 40 is required, such as at gear shifting or vehicle start-up. This also allows the rider to perceive less time spent for engaging the clutch 40.

Still further, in the clutch controller 10, the target torque obtaining section 11b estimates the post-completion EG torque TEfin, which is outputted from the engine 30 after the drive-side member 41 and the driven-side member 42

are completely engaged, and the post-completion EG-side inertia torque TIfin, which is produced on the engine-side mechanism after the drive-side member 41 and the driven-side member 42 are completely engaged. Then, the target torque obtaining section 11b obtains the target transmission torque Ttg based on the estimated post-completion EG torque TEfin and post-completion EG-side inertia torque TIfin. Thus, by such simple processing, the target transmission torque Ttg is set at the torque estimated to be transmitted from the drive-side member 41 to the downstream transmission mechanism after the drive-side member 41 and the driven-side member 42 are completely engaged.

Still further, the above-mentioned clutch controller 10 reduces the impacts of the aging (for example, wear-out) or thermal expansion of the clutch 40. The conventional clutch controller controls the clutch based on the difference in rotational speed between the drive-side member and the driven-side member of the clutch. Therefore, for example, in case the conventional clutch controller continues to control the clutch in the same manner as above even after the drive-side member and the driven-side member have worn out and thus the friction coefficient thereof has changed from the original friction coefficient, sufficient torque transmission is not provided from the drive-side member to the driven-side member. Consequently, the vehicle can decelerate excessively during engaging operation of the clutch. Also, in case the drive-side member and the driven-side member are subjected to thermal expansion, the drive-side member and the driven-side member are engaged in a time period shorter than the original time period. This causes shocks to be generated at the time when these members are completely engaged. The above-mentioned clutch controller 10 controls the engagement state of the clutch 40 based on the actual transmission torque Tac actually transmitted to the driven-side member 42, thus reducing deterioration of the riding comfort due to the aging or thermal expansion of the clutch.

The present teaching is not limited to the above-mentioned clutch controller 10, and can have various alternatives.

For example, in the above description, the clutch actuator control section 11c actuates the clutch actuator 14 based on the difference between the target transmission torque Ttg and the actual transmission torque Tac or the torque deviation $\Delta T$. However, for example, the storage unit 12 may store a table that establishes the correspondence between the target transmission torque Ttg and the clutch position (for example, the rotation angle of the output shaft of the clutch actuator 14) detected by the clutch position detector 21. Then, referring to the table, the clutch actuator control section 11c may actuate the clutch actuator 14 such that the clutch position or the rotation angle of the output shaft of the clutch actuator 14 corresponds to the target transmission torque Ttg calculated by the aforementioned processing.

In the above description, the actual transmission torque Tac is defined as torque transmitted from the drive-side member 41 to the driven-side member 42. However, the actual transmission torque Tac may be defined as torque transmitted from the drive-side member 41 to the countershaft 55 via the gearbox 51 or torque transmitted to the driven-side member 57b of the transmission mechanism 57 via the gearbox 51 and the countershaft 55. In this case, the actual torque obtaining section 11a considers the speed reduction ratio of the gearbox 51 for calculating the actual transmission torque Tac. More specifically, the actual torque obtaining section 11a multiplies the difference between the aforementioned EG torque TEac and EG-side inertia torque TIac by the speed reduction ratio Mratio of the gearbox 51 after the clutch 40 is engaged. In the same manner, the target toque obtaining section 11b multiplies the difference between the post-completion EG torque TEfin and the post-completion EG-side inertia torque TIfin by the speed reduction ratio Mratio of the gearbox 51 after the clutch 40 is engaged, in order to calculate the target transmission torque Ttg.

In addition, in the above description, the control unit 11 obtains the actual transmission torque Tac and the target transmission torque Ttg in the separate processing steps, and obtains the command actuation amount of the clutch actuator 14 based on the obtained actual transmission torque Tac and target transmission torque Ttg. However, for example, the storage unit 12 may store in advance an expression that associates the accelerator displacement Aop, the engine speed $\Omega e$, the EG speed variation $d\Omega e / dt$, the driven-side rotational speed variation $d\Omega cl / dt$, and the clutch rotational speed difference $\Omega diff$ with the command actuation amount. Thus, the control unit 11 may substitute a detected value into the expression to directly calculate the command actuation amount.

Further, in the above description, the command actuation amount of the clutch actuator 14 corresponds to the torque deviation $\Delta T$, and the clutch actuator control section 11c actuates the clutch actuator 14 by an amount corresponding to the torque deviation $\Delta T$. However, the clutch actuator control section 11c may execute proportional integral derivative (PID) control, for example. Specifically, the clutch actuator control section 11c calculates the torque deviation $\Delta T$, while calculating a differential value of the calculated torque deviation $\Delta T$ with respect to time. The clutch actuator control section 11c also calculates an integral value of the calculated torque deviation $\Delta T$ with respect to time. Then, the clutch actuator control section 11c may calculate the command actuation amount based on the torque deviation $\Delta T$ and based on the calculated differential value and integral value.

Still further, in the above-mentioned processing, the target torque obtaining section 11b estimates the torque to be transmitted to the driven-side member 42 after the drive-side member 41 and the driven-side member 42 are completely engaged, and defines the estimated torque as target transmission torque Ttg. However, the target torque obtaining section 11b may set the target transmission torque Ttg at a value depending on the accelerator displacement Aop detected by the accelerator operation detector 17, when the vehicle starts-up or is running at lower-speeds below a predetermined value. This processing is executed as follows, for example.

The storage unit 12 stores in advance a table that establishes the correspondence between the accelerator displacement Aop by the rider and the target transmission torque Ttg (hereinafter the table is referred to as target transmission torque table). Then, the target torque obtaining section 11b refers to the target transmission torque table to obtain the target transmission torque Ttg that corresponds to the accelerator displacement Aop detected based on the request torque signal. Alternatively, the storage unit 12 may store an expression that represents the relationship between the accelerator displacement Aop by the rider and the target transmission torque Ttg. Thus, the target torque obtaining section 11b may substitute the detected accelerator displacement Aop into the expression to obtain the target transmission torque Ttg.

FIG. 10 is a graph showing the relationship between the accelerator displacement Aop and the target transmission torque Ttg obtained from this processing. In the graph, the horizontal axis represents the accelerator displacement Aop, and the vertical axis represents the target transmission torque Ttg. This graph shows that as the accelerator displacement Aop increases, the target transmission torque Ttg increases, accordingly. Also, when the accelerator displacement Aop is lower than a predetermined value A1, the target transmission torque Ttg is preset at a negative value.

Then, the clutch actuator control section 11c obtains the command actuation amount of the clutch actuator 14 based on the torque deviation $\Delta T$ or the difference between the target transmission torque Ttg and the actual transmission torque Tac obtained by the aforementioned actual torque obtaining section 11a. In this processing, for example, the clutch actuator control section 11c refers to the aforementioned actuation amount relational expression to obtain the command actuation amount that corresponds to the torque deviation $\Delta T$.

As described above, the clutch actuator 14 is provided that is capable of being actuated in the engagement direction to engage the clutch 40 or in the disengagement direction to disengage the clutch 40. The clutch actuator control section 11c actuates the clutch actuator 14 in either of the directions determined based on the torque deviation $\Delta T$ and the clutch rotational speed difference $\Omega$diff. Specifically, under the operating condition that the clutch rotational speed difference $\Omega$diff is positive (under the operating condition that the rotational speed of the drive-side member 41 is higher than the rotational speed of the driven-side member 42), if the actual transmission torque Tac is lower than the target transmission torque Ttg, the clutch actuator control section 11c actuates the clutch actuator 14 in the engagement direction. Thereby, the actual transmission torque Tac increases, approximating the target transmission torque Ttg. In other words, when the clutch actuator 14 is actuated in the engagement direction under such operating condition, the engine speed $\Omega$e decreases. Generally, the engine output characteristics show that the EG torque TEac increases as the engine speed $\Omega$e decreases. In addition, the EG-side inertia torque TIac (TIac = I $\times$ d$\Omega$e / dt) is a negative value. Therefore, the actual transmission torque Tac increases (see the expression (1)), approximating the target transmission torque Ttg. If the actual transmission torque Tac exceeds the target transmission torque Ttg under such operating condition, the clutch actuator control section 11c actuates the clutch actuator 14 in the disengagement direction. Thereby, the actual transmission torque Tac decreases.

In contrast, under the operating condition that the clutch rotational speed difference $\Omega$diff is negative (under the operating condition that the rotational speed of the driven-side member 42 is higher than the rotational speed of the drive-side member 41), if the target transmission torque Ttg is lower than the actual transmission torque Tac, the clutch actuator control section 11c actuates the clutch actuator 14 in the engagement direction. Thereby, the actual transmission torque Tac decreases, approximating the target transmission torque Ttg. Under such operating condition, when the clutch actuator 14 is actuated in the engagement direction, the engine speed $\Omega$e increases in contrast to the aforementioned operating condition. In view of the engine output characteristics, the EG torque TEac decreases as the engine speed $\Omega$e increases. In addition, the EG-side inertia torque TIac is a positive value. Thus, the actual transmission torque Tac decreases, approximating the target transmission torque Ttg.

This processing is executed as follows, for example. The clutch actuator control section 11c selectively uses either one of actuation amount relational expressions; The one expression is established such that the actuation amount of the clutch actuator 14 increases in the engagement direction as the torque deviation $\Delta T$ ($\Delta T$ = Ttg - Tac) increases (hereinafter the expression is referred to as engagement actuation amount relational expression (for example, the expression representing the relationship shown in FIG. 6)). The other expression is established such that the actuation amount of the clutch actuator 14 increases in the disengagement direction as the torque deviation $\Delta T$ increases (hereinafter the expression is referred to as disengagement actuation amount relational expression). FIG. 11 is a graph showing the relationship between the command actuation amount represented by the disengagement actuation amount relational expression and the torque deviation $\Delta T$. As shown in FIG. 11, in the disengagement actuation amount relational expression, the command actuation amount is preset such that if the torque deviation $\Delta T$ is a negative value, the clutch actuator 14 is actuated in the direction to engage the clutch 40.

Then, the clutch actuator control section 11c calculates the clutch rotational speed difference $\Omega$diff based on the signals inputted from the clutch rotational speed detectors 23a, 23b. If the calculated clutch rotational speed difference $\Omega$diff is a positive value (if the rotational speed of the drive-side member 41 is higher than the rotational speed of the driven-side member 42), the clutch actuator control section 11c uses the engagement actuation amount relational expression to obtain the command actuation amount of the clutch actuator 14. In contrast, if the calculated clutch rotational speed difference Ωdiff is a negative value, the clutch actuator control section 11c uses the disengagement actuation amount relational expression to obtain the command actuation amount of the clutch actuator 14.

Thereby, an engine brake is applied by the rider setting the accelerator displacement at close to 0 at vehicle start-up. More specifically, in the target transmission torque table shown in FIG. 10, when the accelerator displacement is 0, the target transmission torque Ttg is a negative value. Thus, at vehicle start-up, if the clutch 40 is disengaged and the actual transmission torque Tac is 0, then the torque deviation ΔT is a negative value. In turn, when the vehicle is running downslope, the rotational speed of the driven-side member 42 can be higher than the rotational speed of the drive-side member 41. In this case, the clutch actuator control section 11c uses the disengagement actuation amount relational expression to obtain the command actuation amount, by which the clutch actuator 14 is actuated in the engagement direction, based on the negative torque deviation ΔT (for example, Diff1 in FIG. 11) obtained by subtracting the actual transmission torque Tac from the target transmission torque Ttg. Consequently, an engine brake is applied.

Alternatively, the processing for obtaining the command actuation amount in such a manner by selectively using either the engagement actuation amount relational expression or the disengagement actuation amount relational expression, depending on whether the clutch rotational speed difference Ωdiff is positive or negative, may be executed in the aforementioned processing executed at gear shifting. Thereby, in the case that the accelerator displacement is small even at gear shifting and the clutch rotational speed difference Ωdiff is negative, an engine brake is applied.

Further alternatively, the clutch actuator control section 11c may select either one of the engagement actuation amount relational expression and the disengagement actuation amount relational expression based on the rotational speed of the mechanism upstream of the drive-side member 41 (for example, the engine speed Ωe) and based on the rotational speed of the downstream transmission mechanism downstream of the driven-side member 42, rather than based on the clutch rotational speed difference Ωdiff. For example, the clutch actuator control section 11c may compare a value, which is obtained by multiplying the engine speed Ωe by the speed reduction ratio Pratio of the primary speed reducing mechanism 36, with a value, which is obtained by multiplying the vehicle speed by the speed reduction ratios of the gearbox 51 and the transmission mechanism 57, and based on the comparison result, may determine whether or not the clutch rotational speed difference Ωdiff is positive or negative.

Now, description is made of a flow of the processing executed by the control unit 11 according to the embodiment of the invention. FIG. 12 is a flowchart showing an example of the processing executed by the control unit 11 according to the embodiment of the invention. Here, the processing at vehicle start-up is described as an example.

The control unit 11 determines whether or not the vehicle conditions satisfy predetermined start-up conditions (S201). The start-up conditions are that: for example, the clutch 40 is disengaged, with the gearbox 51 set in a position other than neutral position; and the engine speed Ωe and the accelerator displacement Aop are equal to or greater than their respective predetermined values. Alternatively, the start-up conditions may be that: the clutch 40 is disengaged with the gearbox 51 set in a position other than neutral position; and a value, which is obtained by subtracting the rotational speed of the driven-side member 42 from the rotational speed of the drive-side member 41 of the clutch 40, is a negative value. Further alternatively, continuation of these conditions for a given time period or longer may also be a predetermined start-up condition.

In the determination in the step S201, if the vehicle conditions satisfy the start-up conditions, the target torque obtaining section 11b detects the accelerator displacement Aop based on the request torque signal of the accelerator operation detector 17, and refers to the aforementioned target transmission torque table to obtain the target transmission torque Ttg that corresponds to the accelerator displacement Aop (S202).

In turn, the actual torque obtaining section 11a obtains the actual transmission torque Tac currently transmitted from the drive-side member 41 to the driven-side member 42 (step S203). Further, the clutch actuator control section 11c calculates the clutch rotational speed difference Ωdiff based on the signals inputted from the clutch rotational speed detectors 23a, 23b. Depending on a positive or negative value of the calculated clutch rotational speed difference Ωdiff, the clutch actuator control section 11c selects either one of the aforementioned engagement actuation amount relational expression and disengagement actuation amount relational expression (step S204).

Then, the clutch actuator control section 11c obtains the command actuation amount based on the clutch rotational speed difference Ωdiff and the torque deviation ΔT (S205). Specifically, if the clutch rotational speed difference Ωdiff is negative, the clutch actuator control section 11c substitutes the torque deviation ΔT into the disengagement actuation amount relational expression in order to obtain the command actuation amount. In contrast, if the clutch rotational speed difference Ωdiff is positive, the clutch actuator control section 11c substitutes the torque deviation ΔT into the engagement actuation amount relational expression in order to obtain the command actuation amount. Then, the clutch actuator control section 11c outputs a signal to the clutch actuator drive circuit 15 according to the command actuation amount (S206). This allows the clutch 40, which has been disengaged, to be in a half-clutch state.

After that, the clutch actuator control section 11c calculates the clutch rotational speed difference Ωdiff based on the signals inputted from the clutch rotational speed detectors 23a, 23b, and determines whether or not the calculated clutch rotational speed difference Ωdiff is smaller than the speed difference for discontinuing half-clutch (S207). In this step, if the clutch rotational speed difference Ωdiff is equal to or greater than the speed difference for discontinuing half-clutch, the control unit 11 returns to the step S202 to execute the subsequent processing steps again. Then, when the clutch 40 is in a half-clutch state, the control unit 11 executes the steps S202 to S206 in a predetermined cycle. This allows the actual transmission torque Tac to follow the target transmission torque Ttg, so that the rider can obtain acceleration as required. In contrast, in the determination in the step S207, if the clutch rotational speed difference Ωdiff is smaller than the speed difference for discontinuing half-clutch, the clutch actuator control section 11c actuates the clutch actuator 14 to completely engage the drive-side member 41 with the driven-side member 42 and discontinue the half-clutch state of the clutch 40 (S208). The aforementioned processing is an example of the processing executed by the control unit 11 at vehicle start-up.

In the above-mentioned clutch controller 10, the target torque obtaining section 11b obtains the target transmission torque Ttg according to the accelerator displacement Aop. This allows torque to be transmitted to the axle 3a according to the rider's request, even in the case where the drive-side member 41 and the driven-side member 42 are subjected to wear-out or thermal expansion, so that operability of the vehicle improves particularly at vehicle start-up and low-speed running.

The motorcycle 1 is provided with the engine 30 as a driving source. Alternatively, the driving source may be an electric motor or a hybrid engine combining an electric motor and an engine.

In addition, in the above description, the clutch controller 10 and the clutch 40 apply to the motorcycle 1. However, the above-mentioned clutch controller may apply to four-wheeled automobiles having a mechanical clutch or machinery that outputs torque, outputted from the driving source, via the mechanical clutch to run constantly (for example, industrial machinery and agricultural machinery).

The description above discloses (amongst others) in order to solve the foregoing problems, an embodiment of a clutch controller for controlling an engagement state of a clutch by actuating an actuator, the clutch controller including: an actual torque obtaining means for obtaining torque transmitted from a drive-side member of the clutch to a downstream mechanism in a torque transmission path as actual transmission torque, the downstream mechanism including a driven-side member of the clutch; a target torque obtaining means for obtaining torque that is supposed to be transmitted from the drive-side member to the downstream mechanism in the torque transmission path as target transmission torque; and a control means for actuating the actuator by an actuation amount according to a difference between the actual transmission torque and the target transmission torque.

In addition, in order to solve the foregoing problems, the present description is directed to an embodiment of a straddle-type vehicle including: a power source; a clutch for transmitting torque of the power source or interrupting transmission of the torque; and a clutch controller for controlling an engagement state of the clutch by actuating an actuator. The clutch controller includes: an actual torque obtaining means for obtaining torque transmitted from a drive-side member of the clutch to a downstream mechanism in a torque transmission path as actual transmission torque, the downstream mechanism including a driven-side member of the clutch; a target torque obtaining means for obtaining torque that is supposed to be transmitted from the drive-side member to the downstream mechanism in the torque transmission path as target transmission torque; and a control means for actuating the actuator by an actuation amount obtained according to a difference between the actual transmission torque and the target transmission torque.

Further, in order to solve the foregoing problems, the present description is directed to an embodiment of a method of controlling a clutch for controlling an engagement state of the clutch by actuating an actuator, the method including actuating the actuator by an actuation amount obtained according to a difference between actual transmission torque as torque transmitted from a drive-side member of the clutch to a downstream mechanism in a torque transmission path, the downstream mechanism including a driven-side member of the clutch, and target transmission torque as torque that is supposed to be transmitted from the drive-side member to the downstream mechanism in the torque transmission path.

The present teaching allows appropriate torque to be transmitted from the drive-side member to the downstream mechanism in the torque transmission path, including the driven-side member, during engaging operation of the clutch. The straddle-type vehicle may be a motorcycle (including a scooter), a four-wheeled buggy, a snowmobile or a two-wheeled electric vehicle, for example.

There is particularly disclosed, in order to provide a clutch controller which allows appropriate torque to be transmitted during engaging operation of a clutch, an embodiment of a clutch controller with: an actual torque obtaining section for obtaining torque transmitted from a drive-side member of a clutch to a downstream mechanism in a torque transmission path as actual transmission torque, the downstream mechanism including a driven-side member of the clutch; a target torque obtaining section for obtaining torque that is supposed to be transmitted from the drive-side member to the downstream mechanism in the torque transmission path as target transmission torque; and a clutch actuator control section for actuating an actuator by an actuation amount according to a difference between the actual transmission torque and the target transmission torque.

The description further discloses an embodiment of a clutch controller for controlling an engagement state of a clutch by actuating an actuator, comprising: an actual torque obtaining means for obtaining torque transmitted from a drive-side member of the clutch to a downstream mechanism in a torque transmission path as actual transmission torque, the downstream mechanism including a driven-side member of the clutch; a target torque obtaining means for obtaining torque that is supposed to be transmitted from the drive-side member to the downstream mechanism in the torque transmission path as target transmission torque; and a control means for actuating the actuator by an actuation amount according to a difference between the actual transmission torque and the target transmission torque.

Further, the description discloses an embodiment of the clutch controller, wherein the actual torque obtaining means calculates the actual transmission torque based on torque outputted from a power source and inertia torque produced on a mechanism upstream of the drive-side member in the torque transmission path.

Further, the description discloses an embodiment of the clutch controller, further comprising an operation detecting means for detecting an amount of accelerator operation performed by a user, wherein the target torque obtaining means obtains the target transmission torque according to the amount of the accelerator operation.

Further, the description discloses an embodiment of the clutch controller, wherein the target torque obtaining means estimates torque to be transmitted from the drive-side member to the downstream mechanism in the torque transmission path after the drive-side member and the driven-side member are completely engaged, and defines the estimated torque as the target transmission torque.

Further, the description discloses an embodiment of the clutch controller, wherein the target torque obtaining means estimates torque to be outputted from the power source after the drive-side member and the driven-side member are completely engaged and inertia torque to be produced on the mechanism upstream of the drive-side member in the torque transmission path after the drive-side member and the driven-side member are completely engaged, and based on the estimated torque and inertial torque, estimates the torque to be transmitted to the downstream mechanism after the drive-side member and the driven-side member are completely engaged.

Further, the description discloses an embodiment of the clutch controller, wherein the actuator is provided that is capable of being actuated in an engagement direction to engage the clutch or in a disengagement direction to disengage the clutch, and the control means actuates the actuator in either of the directions determined based on the difference between the target transmission torque and the actual transmission torque and a difference in rotational speed between the drive-side member or the mechanism upstream of the drive-side member and the driven-side member or the mechanism downstream of the driven-side member.

Further, the description discloses an embodiment of a straddle-type vehicle comprising: a power source; a clutch for transmitting torque of the power source or interrupting transmission of the torque; and a clutch controller for controlling an engagement state of the clutch by actuating an actuator, wherein the clutch controller comprises: an actual torque obtaining means for obtaining torque transmitted from a drive-side member of the clutch to a downstream mechanism in a torque transmission path as actual transmission torque, the downstream mechanism including a driven-side member of the clutch; a target torque obtaining means for obtaining torque that is supposed to be transmitted from the drive-side member to the downstream mechanism in the torque transmission path as target transmission torque; and a control means for actuating the actuator by an actuation amount obtained according to a difference between the actual transmission torque and the target transmission torque.

Further, the description discloses an embodiment of a method of controlling a clutch for controlling an engagement state of the clutch by actuating an actuator, the method comprising: actuating the actuator by an actuation amount obtained according to a difference between actual transmission torque as torque transmitted from a drive-side member of the clutch to a downstream mechanism in a torque transmission path, the downstream mechanism including a driven-side member of the clutch, and target transmission torque as torque that is supposed to be transmitted from the drive-side member to the downstream mechanism in the torque transmission path.

## Claims

**1.** Clutch (40) having a clutch controller (10) configured to control an engagement state of the clutch (40) by actuating an actuator (14), comprising:

an actual torque obtaining means (11a) configured to obtain torque transmitted from a drive-side member (41) of the clutch (40) to a downstream mechanism in a torque transmission path as actual transmission torque (Tac), the downstream mechanism including a driven-side member (42) of the clutch (40);

a target torque obtaining means (11b) configured to obtain torque that is supposed to be transmitted from the drive-side member (41) to the downstream mechanism in the torque transmission path as target transmission torque (Ttg), wherein the target torque obtaining means (11b) is configured to estimate torque to be transmitted from the drive-side member (41) to the downstream mechanism in the torque transmission path after the drive-side member (41) and the driven-side member (42) are completely engaged, and to define the estimated torque as the target transmission torque (Ttg); and

a control means (11c) configured to actuate the actuator (14) by an actuation amount according to a difference between the actual transmission torque (Tac) and the target transmission torque (Ttg).

2. Clutch (40) according to claim 1, wherein the actual torque obtaining means (11a) is configured to calculate the actual transmission torque (Tac) based on torque outputted from a power source (TEac) and inertia torque (TIac) produced on a mechanism upstream of the drive-side member (41) in the torque transmission path.

3. Clutch (40) according to claim 1 or 2, further comprising an operation detecting means (17) configured to detect an amount of accelerator operation performed by a user, wherein the target torque obtaining means (11b) is configured to obtain the target transmission torque (Ttg) according to the amount of the accelerator operation.

4. Clutch (40) according to claim 3, wherein the target torque obtaining means (11b) is configured to estimate torque (TEfin) to be outputted from the power source after the drive-side member (41) and the driven-side member (42) are completely engaged and inertia torque (TIfin) to be produced on the mechanism upstream of the drive-side member (41) in the torque transmission path after the drive-side member (41) and the driven-side member (42) are completely engaged, and based on the estimated torque (TEfin) and inertial torque (TIfin), to estimate the torque to be transmitted to the downstream mechanism after the drive-side member (41) and the driven-side member (42) are completely engaged.

5. Clutch (40) according to one of the claims 1 to 4, wherein the actuator (14) is provided that is capable of being actuated in an engagement direction to engage the clutch (40) or in a disengagement direction to disengage the clutch (40), and the control means (11c) is configured to actuate the actuator (14) in either of the directions determined based on the difference between the target transmission torque (Ttg) and the actual transmission torque (Tac) and a difference in rotational speed between the drive-side member (41) or the mechanism upstream of the drive-side member (41) and the driven-side member (42) or the mechanism downstream of the driven-side member (42).

6. Clutch (40) according to one of the claims 1 to 5, wherein the actuation amount per unit time get gradually smaller as difference between the actual transmission torque (Tac) and the target transmission torque (Ttg) get gradually smaller.

7. Straddle-type vehicle (1) comprising:

   a power source (30); and
   a clutch (40) for transmitting torque of the power source (30) or interrupting transmission of the torque having the features of one of the claims 1 to 6.

8. Method of controlling a clutch (40) for controlling an engagement state of the clutch (40) by actuating an actuator (14), the method comprising:
   actuating the actuator (14) by an actuation amount obtained according to a difference between actual transmission torque (Tac) as torque transmitted from a drive-side member (41) of the clutch (40) to a downstream mechanism in a torque transmission path, the downstream mechanism including a driven-side member (42) of the clutch (40), and target transmission torque (Ttg) as torque that is supposed to be transmitted from the drive-side member (41) to the downstream mechanism in the torque transmission path, wherein the target transmission torque (Ttg) is a estimated torque to be transmitted from the drive-side member (41) to the downstream mechanism in the torque transmission path after the drive-side member (41) and the driven-side member (42) are completely engaged.

**Patentansprüche**

1. Kupplung (40), die eine Kupplungs-Steuerungseinrichtung (10) aufweist, die so eingerichtet ist, dass sie einen Eingriffszustand der Kupplung (40) durch Betätigen eines Betätigungselementes (14) steuert, wobei sie umfasst:

   eine Einrichtung (11a) zum Bestimmen eines Ist-Drehmomentes, die so eingerichtet ist, dass sie Drehmoment, das von einem Antriebsseiten-Element (41) der Kupplung (40) zu einem auf einem Drehmoment-Übertragungsweg nachgelagerten Mechanismus übertragen wird, als Ist-Übertragungsdrehmoment (Tac) bestimmt, wobei der nachgelagerte Mechanismus ein Abtriebsseiten-Element (42) der Kupplung (40) einschließt;
   eine Einrichtung (11b) zum Bestimmen eines Soll-Drehmomentes, die so eingerichtet ist, dass sie Drehmoment, das von dem Antriebsseiten-Element (41) zu dem auf dem Drehmoment-Übertragungsweg nachgelagerten Mechanismus übertragen werden soll, als Soll-Übertragungsdrehmoment (Ttg) bestimmt, wobei die Einrichtung (11b) zum Bestimmen eines Soll-Drehmomentes so eingerichtet ist, dass sie Drehmoment schätzt, das von dem Antriebsseiten-Element (41) zu dem auf dem Drehmoment-Übertragungsweg nachgelagerten Mechanismus zu übertragen ist, nachdem das Antriebsseiten-Element (41) und das Abtriebsseiten-Element (42) vollständig in Eingriff sind, und das geschätzte Drehmoment als das Soll-Übertragungsdrehmoment (Ttg) definiert; sowie
eine Steuerungseinrichtung (11c), die so eingerichtet ist, dass sie das Betätigungselement (14) in einem Betätigungs-Maß entsprechend einer Differenz zwischen dem Ist-Übertragungsdrehmoment (Tac) und dem Soll-Übertragungsdrehmoment (Ttg) betätigt.

**2.** Kupplung (40) nach Anspruch 1, wobei die Einrichtung (11a) zum Bestimmen eines Ist-Drehmomentes so eingerichtet ist, dass sie das Ist-Übertragungsdrehmoment (Tac) auf Basis von Drehmoment, das von einer Kraftquelle (TEac) ausgegeben wird, und Trägheitsmoment (TIac) berechnet, das an einem auf dem Drehmoment-Übertragungsweg dem Antriebsseiten-Element (41) vorgelagerten Mechanismus erzeugt wird.

**3.** Kupplung (40) nach Anspruch 1 oder 2, das des Weiteren eine Einrichtung (17) zum Erfassen von Bedienung umfasst, die so eingerichtet ist, dass sie ein Maß von Gaspedal-Bedienung erfasst, die durch einen Benutzer durchgeführt wird, wobei die Einrichtung (11b) zum Bestimmen eines Soll-Drehmomentes so eingerichtet ist, dass sie das Soll-Übertragungsdrehmoment (Ttg) entsprechend dem Maß der Gaspedal-Bedienung bestimmt.

**4.** Kupplung (40) nach Anspruch 3, wobei die Einrichtung (11b) zum Bestimmen eines Soll-Drehmomentes so ausgeführt ist, dass sie Drehmoment (TEfin), das von der Kraftquelle (30) auszugeben ist, nachdem das Antriebsseiten-Element (41) und das Abtriebsseiten-Element (42) vollständig in Eingriff sind, sowie Trägheitsmoment (TIfin) schätzt, das an dem dem Antriebsseiten-Element (41) auf dem Drehmoment-Übertragungsweg vorgelagerten Mechanismus erzeugt wird, nachdem das Antriebsseiten-Element (41) und das Abtriebsseiten-Element (42) vollständig in Eingriff sind, und auf Basis des geschätzten Drehmomentes (TEfin) sowie des Trägheitsmomentes (TIfin) das Drehmoment schätzt, das zu dem nachgelagerten Mechanismus zu übertragen ist, nachdem das Antriebsseiten-Element (41) und das Abtriebsseiten-Element (42) vollständig in Eingriff sind.

**5.** Kupplung (40) nach einem der Ansprüche 1 bis 4, wobei das Betätigungselement (14) vorhanden ist, das in einer Einrück-Richtung zum Einrücken der Kupplung (40) oder in einer Ausrück-Richtung zum Ausrücken der Kupplung (40) betätigt werden kann, und die Steuerungseinrichtung (11c) so eingerichtet ist, dass sie das Betätigungselement (40) in einer der Richtungen betätigt, die auf Basis der Differenz zwischen dem Soll-Übertragungsdrehmoment (Ttg) und dem Ist-Übertragungsdrehmoment (Tac) sowie einer Differenz zwischen einer Drehgeschwindigkeit des Antriebsseiten-Elementes (41) oder des dem Abtriebsseiten-Element (41) vorgelagerten Mechanismus und des Abtriebsseiten-Elementes (41) oder des dem Antriebsseiten-Element (42) nachgelagerten Mechanismus ermittelt wird.

**6.** Kupplung (40) nach einem der Ansprüche 1 bis 5, wobei das Maß der Betätigung pro Zeiteinheit allmählich abnimmt, wenn die Differenz zwischen dem Ist-Übertragungsdrehmoment (Tac) und dem Soll-Übertragungsdrehmoment (Ttg) allmählich abnimmt.

**7.** Spreizsitz-Fahrzeug (1) das umfasst:

eine Kraftquelle (30);
eine Kupplung (40), mit der Drehmoment der Kraftquelle (30) übertragen wird oder Übertragung des Drehmomentes unterbrochen wird, und die die Merkmale nach einem der Ansprüche 1 bis 6 aufweist.

**8.** Verfahren zum Steuern einer Kupplung (40), mit dem ein Eingriffszustand der Kupplung (40) durch Betätigen eines Betätigungselementes (14) gesteuert wird, wobei das Verfahren die folgenden Schritte umfasst:
Betätigen des Betätigungselementes (14) in einem Betätigungs-Maß, das entsprechend einer Differenz zwischen Ist-Übertragungsdrehmoment (Tac) als Drehmoment, das von einem Antriebsseiten-Element (41) der Kupplung (40) zu einem auf einem Drehmoment-Übertragungsweg nachgelagerten Mechanismus übertragen wird, wobei der nachgelagerte Mechanismus ein Abtriebsseiten-Element (42) der Kupplung (40) einschließt, und Soll-Übertragungsdrehmoment (Ttg) als Drehmoment bestimmt wird, das von dem Antriebsseiten-Element (41) zu dem auf dem Drehmoment-Übertragungsweg nachgelagerten Mechanismus übertragen werden soll, wobei das Soll-Übertragungsdrehmoment (Ttg) ein geschätztes Drehmoment ist, das von dem Antriebsseiten-Element (41) zu dem auf dem Drehmoment-Übertragungsweg nachgelagerten Mechanismus zu übertragen ist, nachdem das Antriebsseiten-Element (41) und das Abtriebsseiten-Element (42) vollständig in Eingriff sind.

## Revendications

1. Embrayage (40) comportant une commande d'embrayage (10) configurée pour commander un état d'embrayage de l'embrayage (40) en actionnant un actionneur (14), comportant :

    un moyen d'obtention de couple réel (11a) configuré pour obtenir le couple transmis par un élément côté entraînement (41) de l'embrayage (40) à un mécanisme en aval dans un chemin de transmission du couple, en tant que couple de transmission réel (Tac), le mécanisme en aval comprenant un élément côté entraîné (42) de l'embrayage (40) ;
    un moyen d'obtention de couple cible (11b) configuré pour obtenir un couple devant être transmis de l'élément côté entraînement (41) au mécanisme en aval dans le chemin de transmission de couple, en tant que couple de transmission cible (Ttg), où le moyen d'obtention de couple cible (11b) est configuré pour estimer le couple à transmettre de l'élément côté entraînement (41) au mécanisme en aval dans le chemin de transmission de couple, après que l'élément côté entraînement (41) et l'élément côté entraîné (42) sont complètement embrayés, et pour définir le couple estimé en tant que couple de transmission cible (Ttg) ;
    et
    un moyen de commande (11c) configuré pour actionner l'actionneur (14) selon un degré d'actionnement correspondant à la différence entre le couple de transmission réel (tac) et le couple de transmission cible (Ttg).

2. Embrayage (40) selon la revendication 1, où le moyen d'obtention de couple réel (11a) est configuré pour calculer le couple de transmission réel (Tac) en se fondant sur le couple émis par une source d'entraînement (TEac) et un couple d'inertie (TIac) produit sur un mécanisme en amont de l'élément côté entraînement (41) dans le chemin de transmission de couple.

3. Embrayage (40) selon la revendication 1 ou 2, comportant en outre un moyen de détection d'actionnement (17) configuré pour détecter un degré d'actionnement de l'accélérateur par un utilisateur, où le moyen d'obtention de couple cible (11b) est configuré pour obtenir le couple de transmission cible (Ttg) en fonction du degré d'actionnement de l'accélérateur.

4. Embrayage (40) selon la revendication 3, où le moyen d'obtention de couple cible (11b) est configuré pour estimer un couple (TEfin) à émettre en sortie par la source d'entraînement après que l'élément côté entraînement (41) et l'élément côté entraîné (42) sont complètement embrayés et un couple d'inertie (TIfin) à produire sur le mécanisme en amont de l'élément côté entraînement (41) dans le chemin de transmission de couple après que l'élément côté entraînement (41) et l'élément côté entraîné (42) sont complètement embrayés, et en se fondant sur le couple estimé (TEfin) et le couple d'inertie (TIfin), pour estimer le couple à transmettre au mécanisme en aval après que l'élément côté entraînement (41) et l'élément côté entraîné (42) sont complètement embrayés.

5. Embrayage (40) selon l'une des revendications 1 à 4, où l'actionneur (14) prévu est apte à être actionné dans une direction d'embrayage pour embrayer l'embrayage (40) ou dans une direction de débrayage pour débrayer l'embrayage (40), et le moyen de commande (11c) est configuré pour actionner l'actionneur (14) dans l'une ou l'autre direction déterminée en se fondant sur la différence entre le couple de transmission cible (Ttg) et le couple de transmission réel (Tac) et une différence de vitesse de rotation entre l'élément côté entraînement (41) ou le mécanisme en amont de l'élément côté entraînement (41) et l'élément côté entraîné (42) ou le mécanisme en aval de l'élément côté entraîné (42).

6. Embrayage (40) selon l'une des revendications 1 à 5, où le degré d'actionnement par unité de temps diminue graduellement à mesure que la différence entre le couple de transmission réel (Tac) et le couple de transmission cible (Ttg) diminue graduellement.

7. Véhicule de type à enfourcher (1) comportant :

    une source d'entraînement (30) ; et
    un embrayage (40) pour transmettre un couple de la source d'entraînement (30) ou interrompre la transmission du couple présentant les caractéristiques selon l'une des revendications 1 à 6.

8. Procédé de commande d'un embrayage (40) pour commander un état d'embrayage de l'embrayage (40) en actionnant un actionneur (14), le procédé comportant :
l'actionnement de l'actionneur (14) selon un degré d'actionnement obtenu à partir d'une différence entre le couple de transmission réel (Tac), en tant que couple transmis d'un élément côté entraînement (41) de l'embrayage (40) à un mécanisme en aval dans un chemin de transmission de couple, le mécanisme en aval comprenant un élément côté entraîné (42) de l'embrayage (40), et le couple de transmission cible (Ttg), en tant que couple devant être transmis de l'élément côté entraînement (41) au mécanisme en aval dans le chemin de transmission de couple, où le couple de transmission cible (Ttg) est un couple estimé devant être transmis de l'élément côté entraînement (41) au mécanisme en aval dans le chemin de transmission de couple après que l'élément côté entraînement (41) et l'élément côté entraîné (42) sont complètement embrayés.

[FIG. 1]

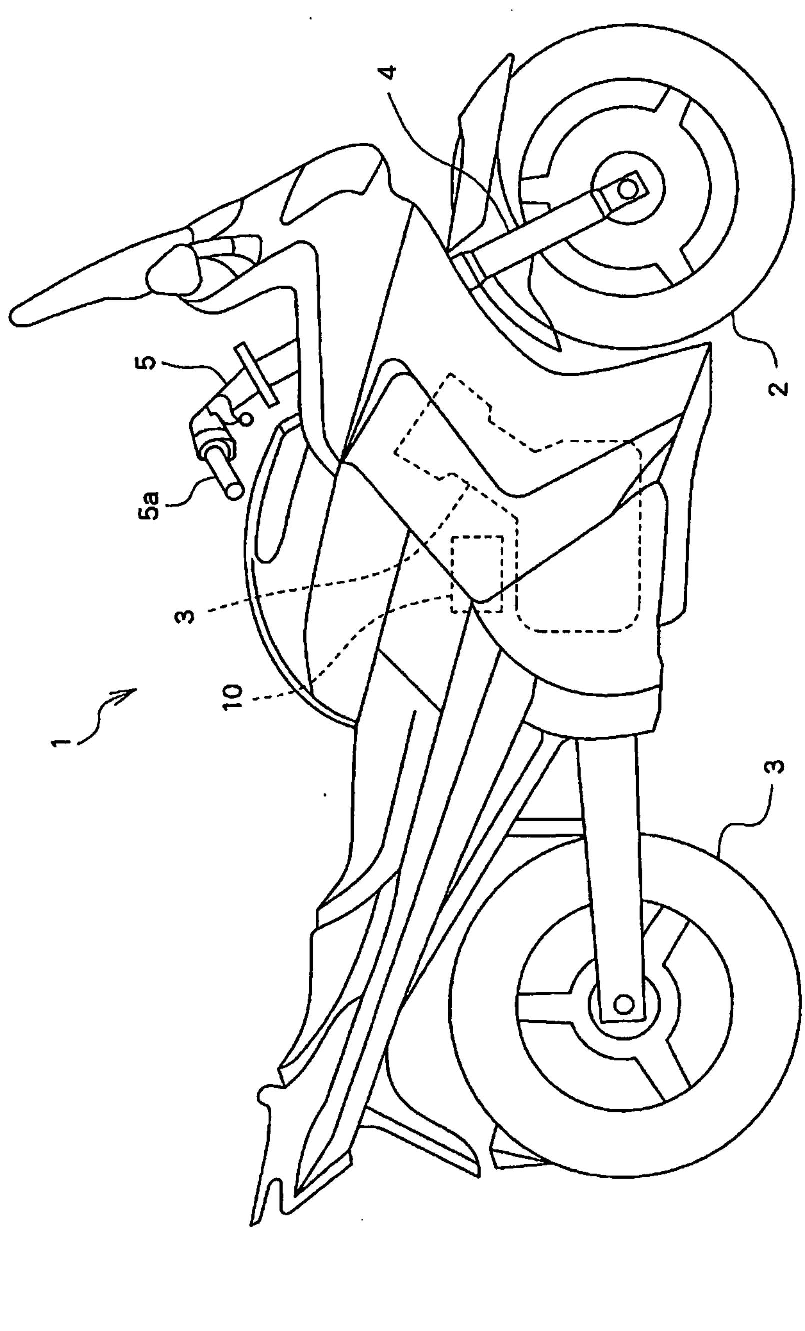

[FIG. 2]

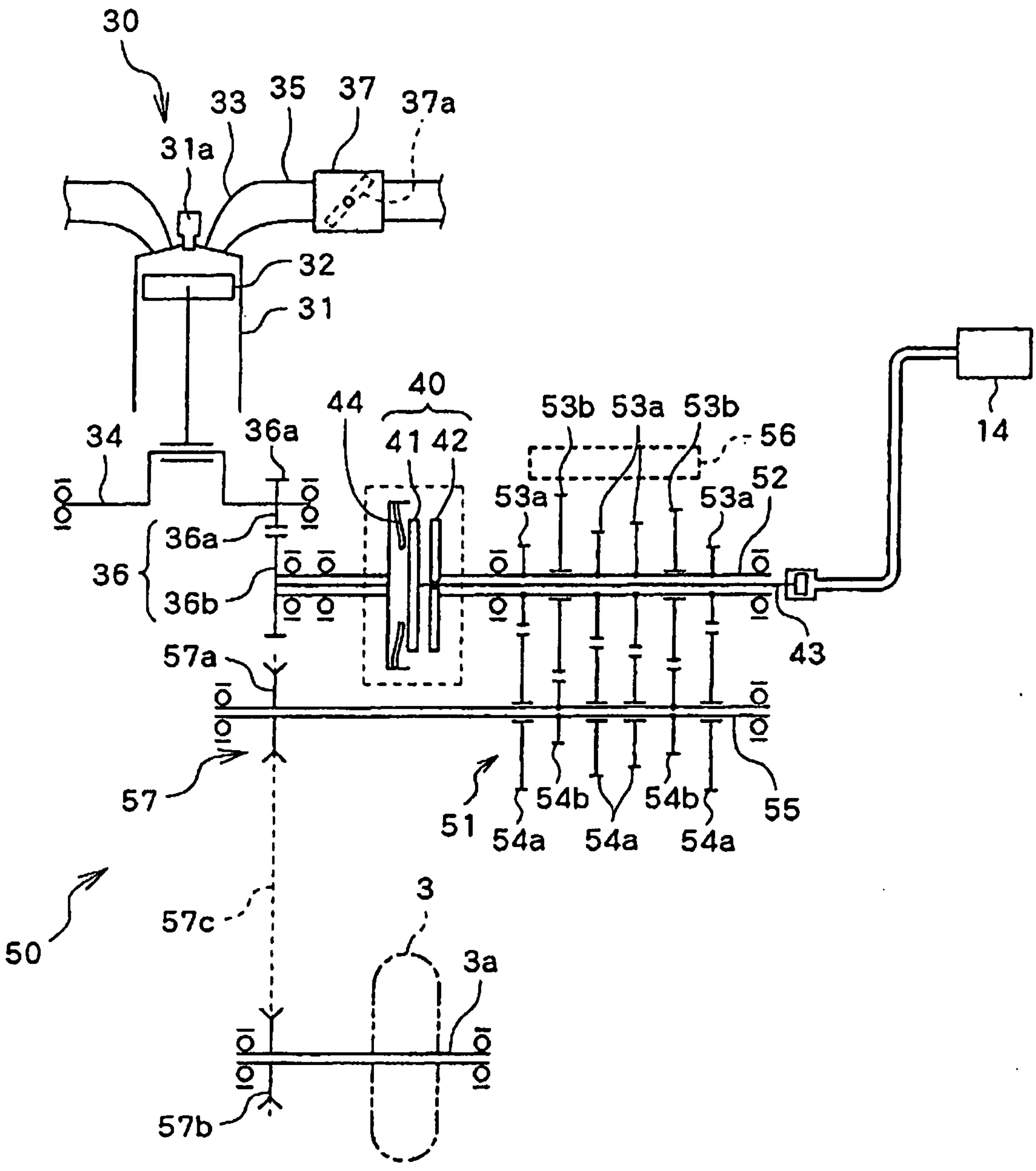
30
33
35
37
37a
31a
32
31
44
40
41
42
53b
53a
53b
56
34
36a
53a
53a
52
14
36a
36
36b
43
57a
57
51
54b
54b
55
54a
54a
54a
50
57c
3
3a
57b

[FIG. 3]

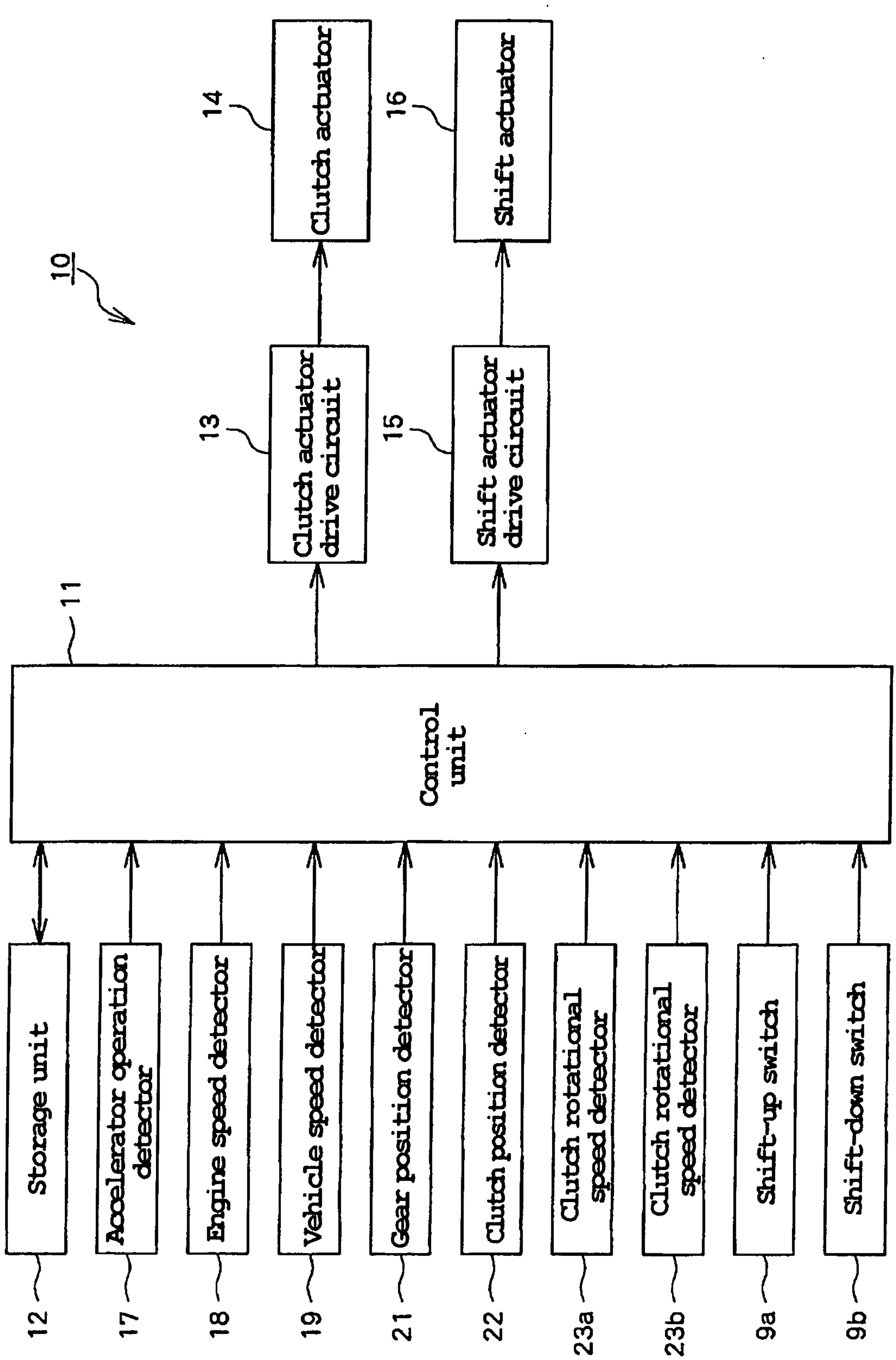
10
Clutch actuator
14
Shift actuator
16
Clutch actuator drive circuit
13
Shift actuator drive circuit
15
Control unit
11
Storage unit
12
Accelerator operation detector
17
Engine speed detector
18
Vehicle speed detector
19
Gear position detector
21
Clutch position detector
22
Clutch rotational speed detector
23a
Clutch rotational speed detector
23b
Shift-up switch
9a
Shift-down switch
9b

[FIG. 4]

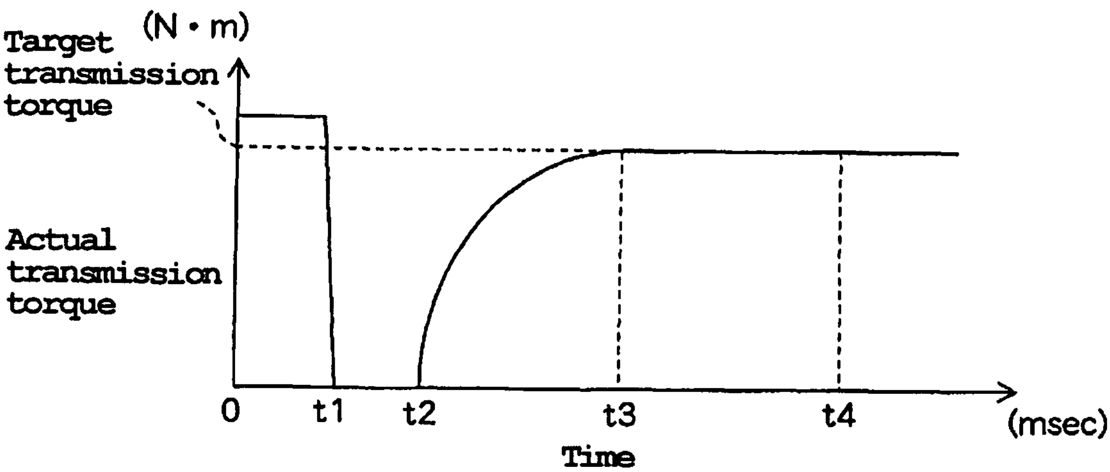
(N • m)
Target transmission torque
Actual transmission torque
0
t1
t2
t3
t4
(msec)
Time

[FIG. 5]

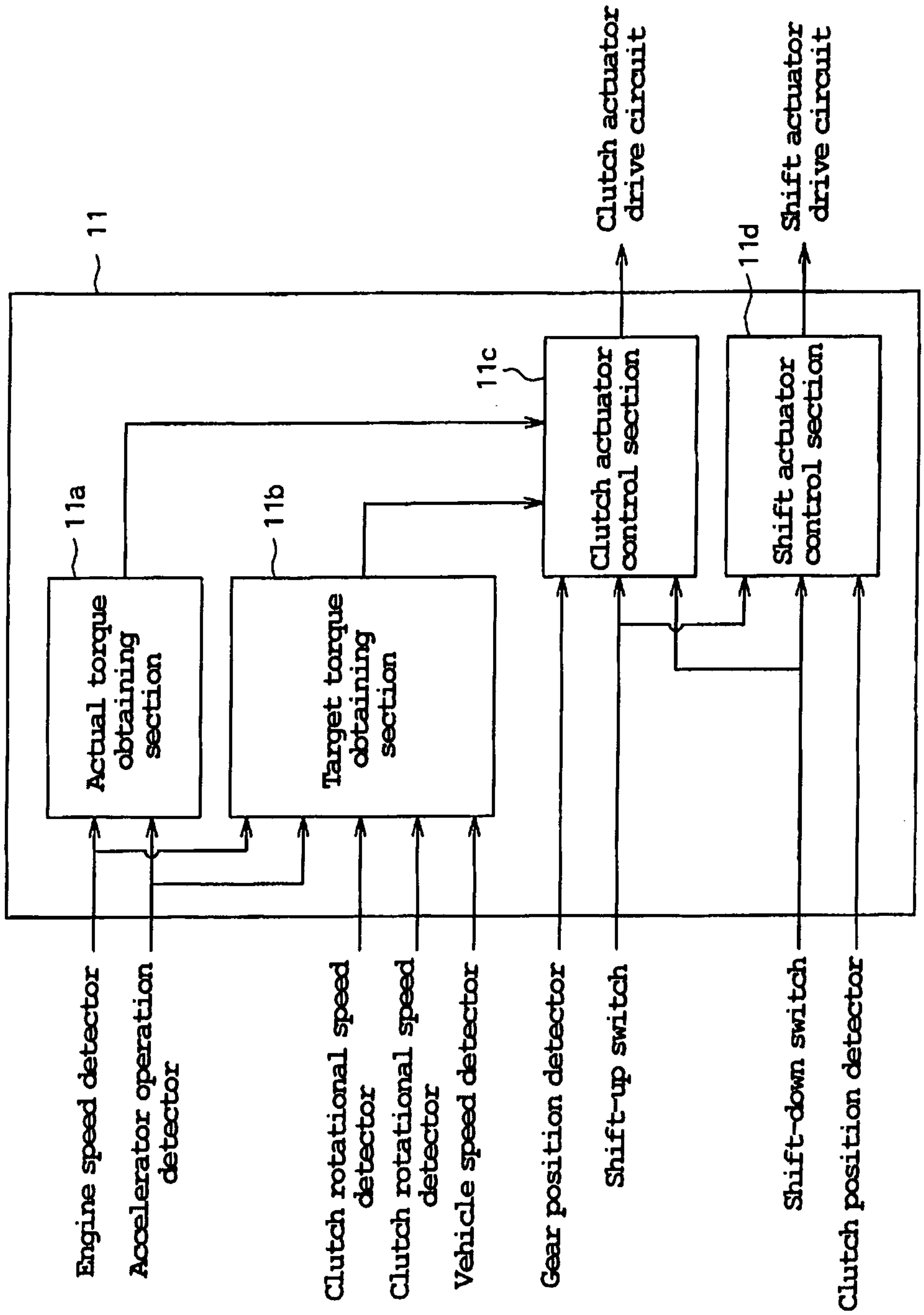
11
11a
11b
11c
11d
Actual torque obtaining section
Target torque obtaining section
Clutch actuator control section
Shift actuator control section
Clutch actuator drive circuit
Shift actuator drive circuit
Engine speed detector
Accelerator operation detector
Clutch rotational speed detector
Clutch rotational speed detector
Vehicle speed detector
Gear position detector
Shift-up switch
Shift-down switch
Clutch position detector

[FIG. 6]

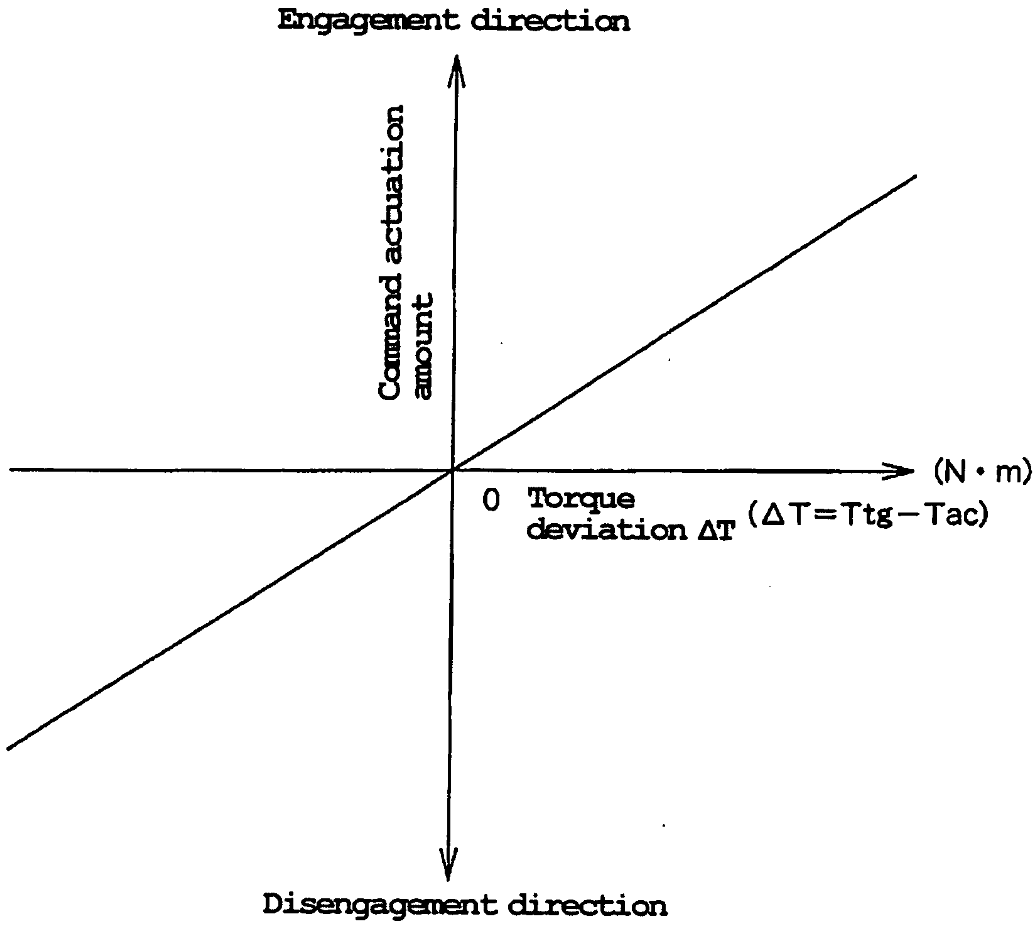
Engagement direction
Command actuation amount
(N・m)
0
Torque deviation ΔT (ΔT=Ttg−Tac)
Disengagement direction

[FIG. 7]

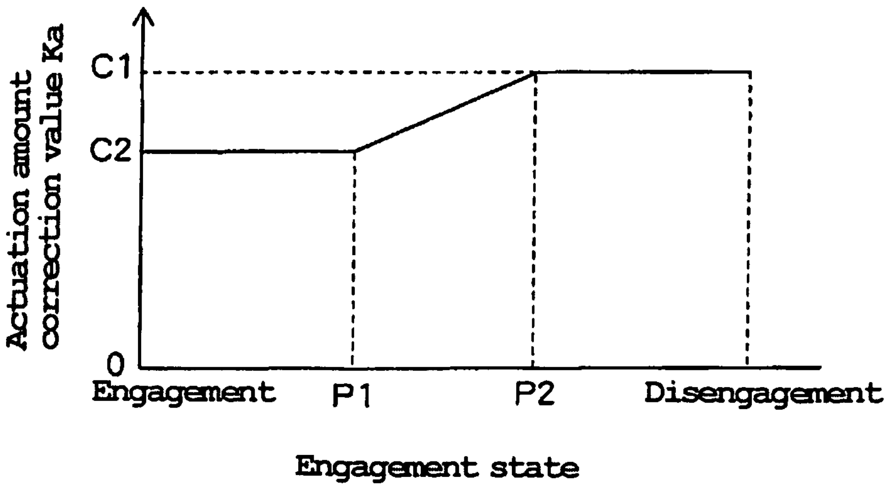
Actuation amount correction value Ka
C1
C2
0
Engagement
P1
P2
Disengagement
Engagement state

[FIG. 8]

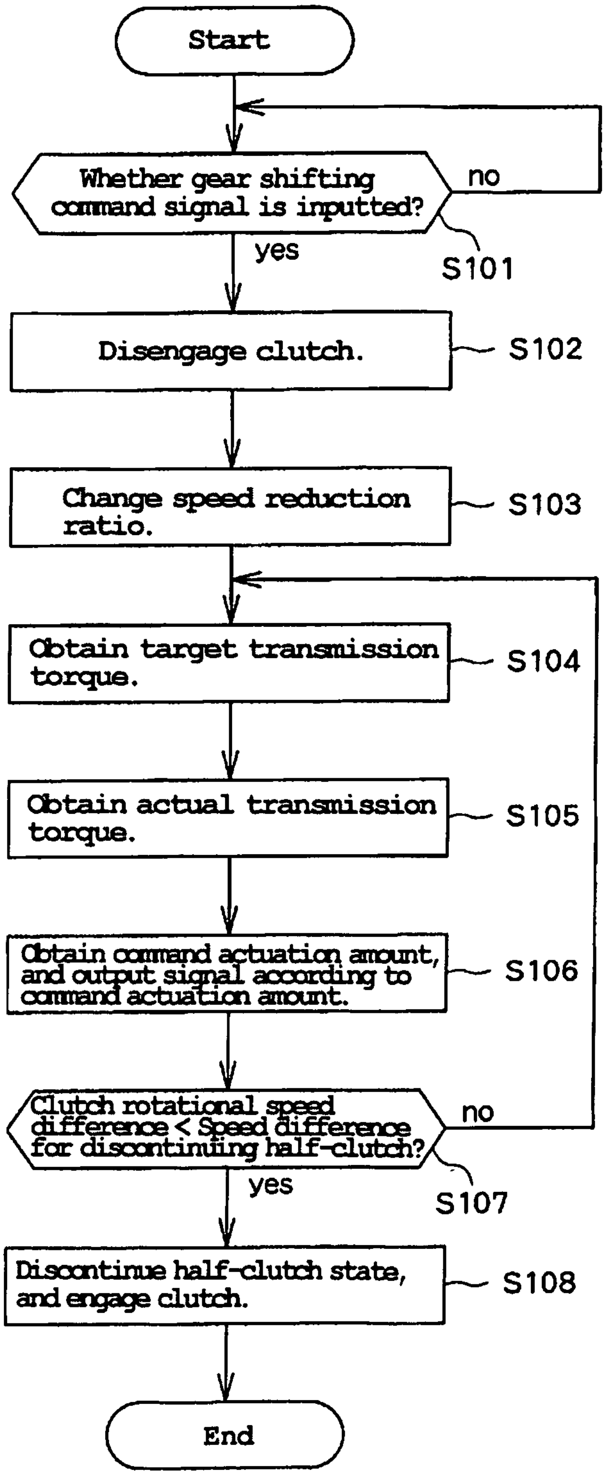
Start
Whether gear shifting command signal is inputted?
no
yes
S101
Disengage clutch.
S102
Change speed reduction ratio.
S103
Obtain target transmission torque.
S104
Obtain actual transmission torque.
S105
Obtain command actuation amount, and output signal according to command actuation amount.
S106
Clutch rotational speed difference < Speed difference for discontinuing half-clutch?
no
yes
S107
Discontinue half-clutch state, and engage clutch.
S108
End

[FIG. 9]

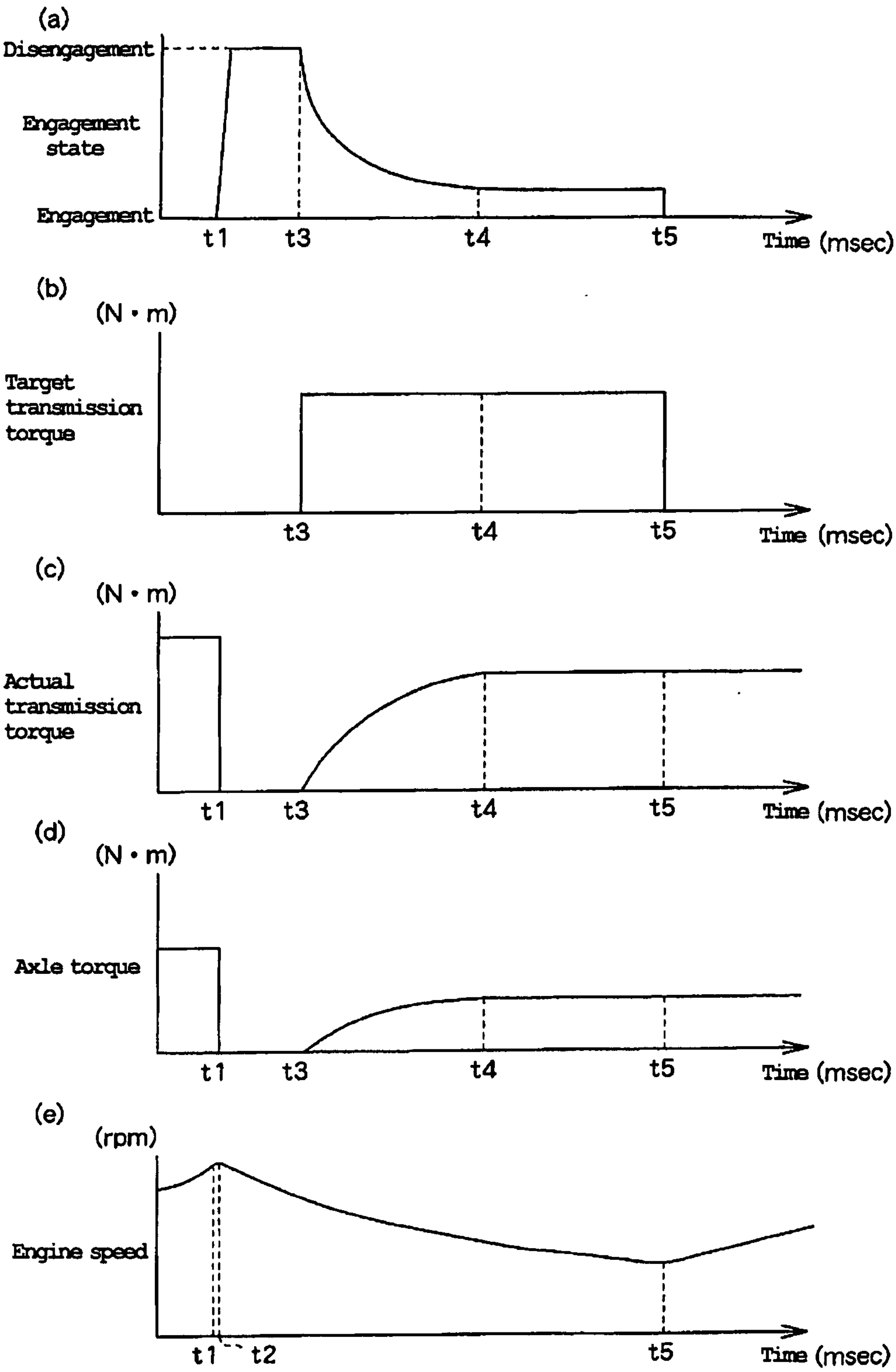
(a)
Disengagement
Engagement state
Engagement
t1
t3
t4
t5
Time (msec)
(b)
(N • m)
Target transmission torque
t3
t4
t5
Time (msec)
(c)
(N • m)
Actual transmission torque
t1
t3
t4
t5
Time (msec)
(d)
(N • m)
Axle torque
t1
t3
t4
t5
Time (msec)
(e)
(rpm)
Engine speed
t1
t2
t5
Time (msec)

[FIG. 10]

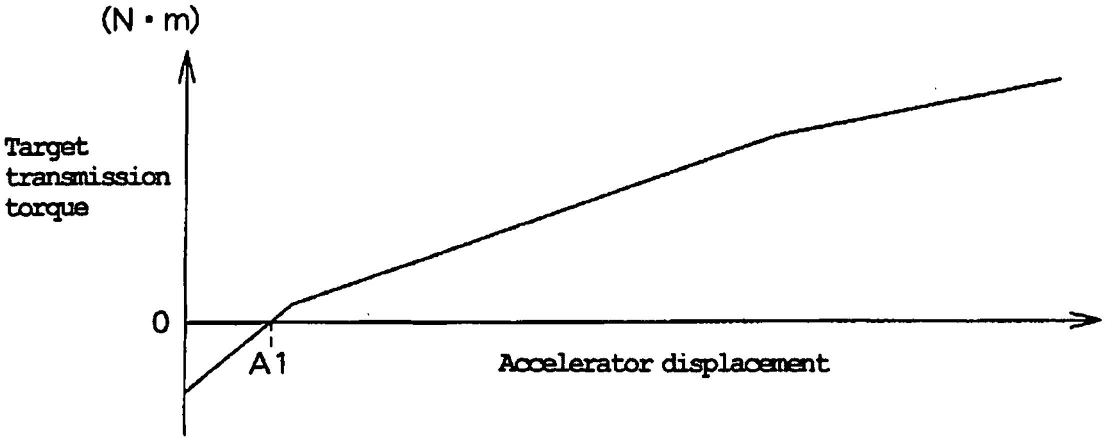
(N • m)
Target transmission torque
0
A1
Accelerator displacement

[FIG. 11]

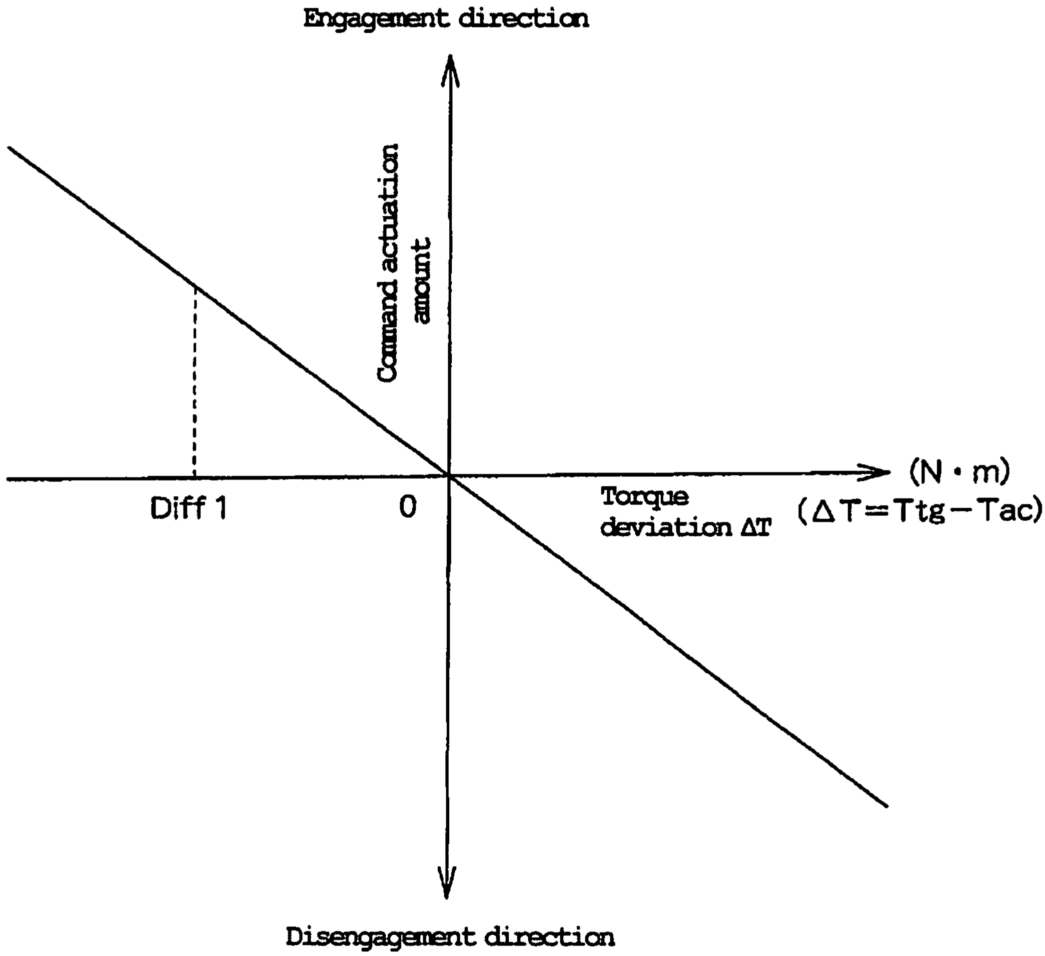
Engagement direction
Command actuation amount
(N • m)
Diff 1
0
Torque deviation ΔT
(ΔT=Ttg−Tac)
Disengagement direction

[FIG. 12]

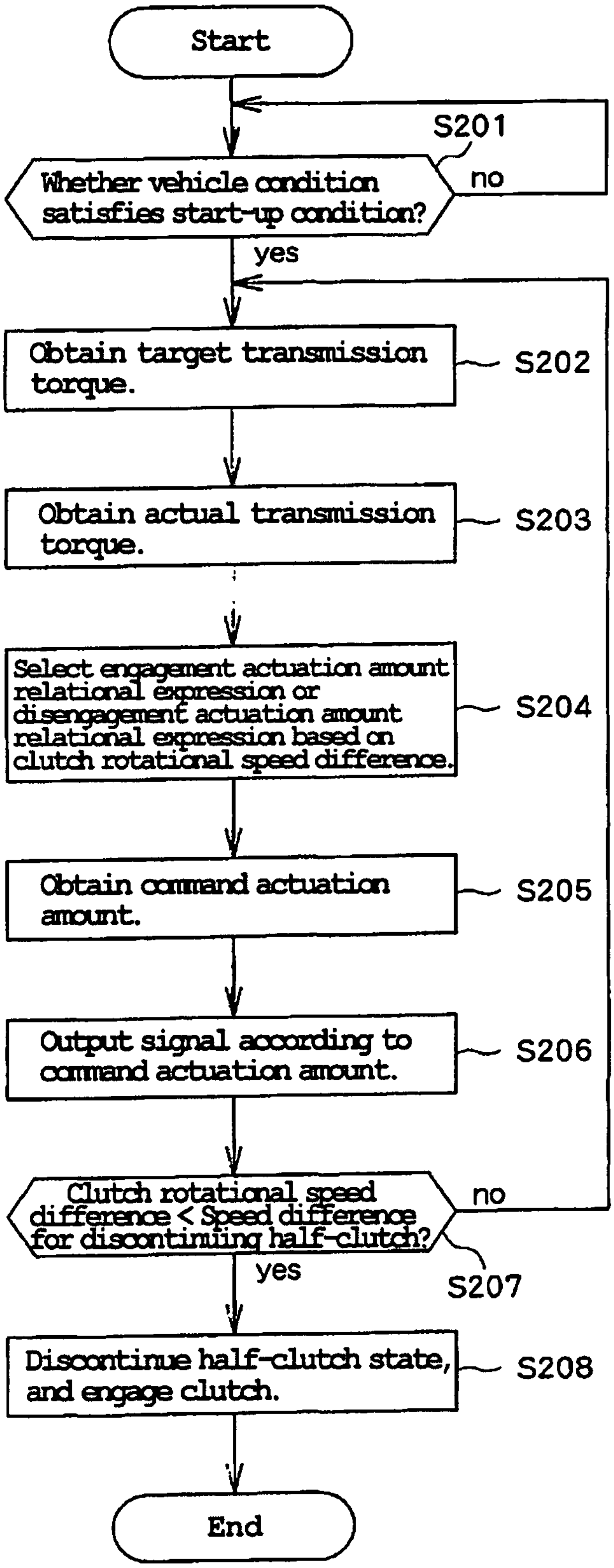
Start
S201
Whether vehicle condition satisfies start-up condition?
no
yes
Obtain target transmission torque.
S202
Obtain actual transmission torque.
S203
Select engagement actuation amount relational expression or disengagement actuation amount relational expression based on clutch rotational speed difference.
S204
Obtain command actuation amount.
S205
Output signal according to command actuation amount.
S206
Clutch rotational speed difference < Speed difference for discontinuing half-clutch?
no
yes
S207
Discontinue half-clutch state, and engage clutch.
S208
End

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 102005030534
- EP 1617058 A
- DE 102005057844
- DE 102005030191
- EP 1688635 A
- WO 03019029 A
- JP 2001146930 A